# EUROPÄISCHE PATENTSCHRIFT

(11) **EP 2 435 884 B1**
(45) Veröffentlichungstag und Bekanntmachung des Hinweises auf die Patenterteilung: **31.01.2018**
(21) Anmeldenummer: 10721482.7
(22) Anmeldetag: 19.05.2010
(51) Int. Cl.: G05B 19/4068, G05B 19/4069, G05B 19/409

(54) **VIRTUELLE WERKZEUGMASCHINE ZUR DARSTELLUNG VON AKTIONEN VON BEARBEITUNGSEINHEITEN UND ERZEUGUNG VON BETRIEBSDATEN AUS BENUTZEREINGABEN**
VIRTUAL MACHINE TOOL FOR REPRESENTING OPERATIONS OF MACHINING UNITS AND FOR GENERATING OPERATIONAL DATA FROM USER INPUT
MACHINE-OUTIL VIRTUELLE SERVANT À REPRÉSENTER DES ACTIONS MENÉES PAR DES UNITÉS D'USINAGE ET À PRODUIRE DES DONNÉES DE FONCTIONNEMENT À PARTIR D'ENTRÉES D'UTILISATEUR

(30) Priorität: 26.05.2009 DE 102009023648
(43) Veröffentlichungstag der Anmeldung: 04.04.2012
(73) Patentinhaber: Index-Werke GmbH & Co. KG Hahn & Tessky, 73730 Esslingen (DE)
(72) Erfinder: BECK, Eberhard, 73773 Aichwald (DE); GROSSMANN, Stefan, 73669 Lichtenwald (DE); JUNGINGER, Jörg, 73776 Altbach (DE); EISELE, Matthias, 70329 Stuttgart (DE)
(74) Vertreter: Hoeger, Stellrecht & Partner Patentanwälte mbB
(86) Internationale Anmeldenummer: PCT/EP2010/056919
(87) Internationale Veröffentlichungsnummer: WO 2010/136368

(56) Entgegenhaltungen:
- EP-A2- 0 902 343
- EP-A2- 1 762 919
- DE-A1-102007 045 593

## Beschreibung

Die Erfindung betrifft ein Verfahren zur Steuerung einer einen Arbeitsraum und in diesem angeordnete Bearbeitungseinheiten aufweisende Werkzeugmaschine, bei welchem basierend auf Betriebsdaten sowie basierend auf einem abgespeicherten Maschinenmodell auf einer Visualisierungseinheit die reale Werkzeugmaschine mindestens im Bereich ihres Arbeitsraums mittels Visualisierungselementen als virtuelle Werkzeugmaschine mit in einem virtuellen Arbeitsraum vorgesehenen virtuellen Bearbeitungseinheiten sowie deren Funktionen als virtuelle Funktionen dargestellt wird.

Ein derartiges Verfahren ist aus der EP 0 902 343 A2 bekannt.

Bei diesem bekannten Verfahren erfolgt die Funktionszuordnung dadurch, dass auf dem Bildschirm eine Funktionseinheit ausgewählt wird.

Dies führt dazu, dass die Modellkonfigurationseinheit in Verbindung mit dem Filterdatensatz eine Liste erstellt und die Liste angezeigt wird.

Die Bedienungsperson hat somit die Chance aus der Liste mögliche Funktionen, das heißt Bewegungen auszuwählen, die fest in der Liste vorgegeben sind und aus diesen vorgegebenen Bewegungen wird dann selbsttätig der jeweilige Steuerdatensatz erzeugt.

Die Liste weist somit fest vorgegebene Funktionen auf.

Ein derartiges Verfahren ist auch aus der EP 1 762 919 A2 bekannt.

Gemäß diesem Verfahren sind manuelle Eingabeelemente zur Einwirkung auf einen CNC-Bearbeitungskomplex vorgesehen und beispielsweise führt eine derartige Einwirkung auf den CNC-Bearbeitungskomplex zum Auslösen einer Verfahrbewegung einer ausgewählten Bearbeitungseinheit entsprechend einer manuellen Betätigung der Eingabeelemente, so dass beispielsweise die Bearbeitungseinheit ihre Position verändert.

Die eingangs genannte Aufgabe wird erfindungsgemäß durch die Merkmale des Anspruchs 1 und/oder des Anspruchs 2 gelöst.

Insbesondere ist bei einem erfindungsgemäßen Verfahren vorgesehen, dass eine manuelle Interaktion vorgesehen wird, dass eine Zuordnung einer Funktion der Werkzeugmaschine zu dieser manuellen Interaktion vorgesehen wird, und dass mit einer Funktionsdatengeneratoreinheit der manuellen Interaktion unter Berücksichtigung der zugeordneten Funktion entsprechende Betriebsdaten erzeugt und diese Betriebsdaten in einer Aufnahme/Wiedergabeeinheit gespeichert werden.

Eine vorteilhafte Version des Verfahrens sieht vor, dass die manuelle Interaktion zeitgleich durch die Visualisierungselemente dargestellt wird.

Das erfindungsgemäße Verfahren sieht vor, dass die manuelle Einwirkung auf die Interaktionseinheit durch ein durch diese steuerbares und auf der Visualisierungseinheit vorgesehenes Interaktionsvisualisierungselement dargestellt wird.

Das erfindungsgemäße Verfahren sieht ferner vor, dass mittels der Interaktionseinheit die Funktion als Bewegung vorgegeben und mittels der Visualisierungssteuerung auf der virtuellen Werkzeugmaschine als Bewegung von mindestens einem der Visualisierungselemente visualisiert wird.

Ferner ist bei einer Ausführungsform des Verfahrens vorgesehen, dass mit der Interaktionseinheit die Funktion durch Antasten eines Funktionsfeldes auf der Visualisierungseinheit vorgegeben und mittels der Visualisierungssteuerung in ihrer Ausführung auf der virtuellen Werkzeugmaschine visualisiert wird.

Insbesondere sieht eine Ausführungsform vor, dass mit der Interaktionseinheit die jeweils der manuellen Interaktion zuzuordnende Funktion auswählbar ist.

Ferner sieht eine weitere Ausführungsform vor, dass die Auswahl der Funktion durch Aufrufen mindestens eines der Visualisierungselemente erfolgt.

Beispielsweise ist vorgesehen, dass das mindestens eine der Visualisierungselemente durch Anfahren und Antasten des mindestens einen der Visualisierungselemente mit Hilfe der Interaktionseinheit aufgerufen wird.

Eine Lösung des Verfahrens sieht vor, dass bei Auswahl der Funktion das die Funktion repräsentierende Visualisierungselement auf der Visualisierungseinheit hervorgehoben dargestellt wird.

Eine andere Lösung des Verfahrens sieht vor, dass ein Aufrufen der jeweiligen Funktion eine Darstellung des Visualisierungselements dieser Funktion zur Folge hat.

Eine weitere Lösung des Verfahrens sieht vor, dass in dem Maschinenmodell die möglichen Funktionen der realen Werkzeugmaschine gespeichert werden und dass durch Funktionswahleinheit die zuzuordnenden Funktionen auf die möglichen Funktionen der realen Werkzeugmaschine begrenzt werden.

Eine günstige Lösung des Verfahrens sieht vor, dass die möglichen Funktionen der realen Werkzeugmaschine auf der Visualisierungseinheit mittels Visualisierungselementen dargestellt werden.

Eine weitere günstige Lösung des Verfahrens sieht vor, dass als mindestens eines der Visualisierungselemente ein graphisches Element verwendet wird.

Insbesondere sieht eine Lösung vor, dass als mindestens eines der Visualisierungselemente ein Funktionsfeld verwendet wird.

Beispielsweise sieht eine Lösung vor, dass mindestens eines der Visualisierungselemente eine virtuelle Bearbeitungseinheit darstellt.

Bei einer zweckmäßigen Variante ist vorgesehen, dass mindestens eines der Visualisierungselemente ein Werkzeug darstellt.

Bei einer weiteren zweckmäßigen Variante ist vorgesehen, dass mindestens eines der Visualisierungselemente ein virtuelles Werkstück darstellt.

Die Erfindung gemäß Anspruch 1 sieht vor, dass als Interaktionseinheit zur Erfassung der manuellen Interaktion eine Handbedieneinheit verwendet wird.

Die Erfindung gemäß Anspruch 2 sieht vor, dass als Interaktionseinheit zur Erfassung der manuellen Interaktion eine berührungssteuerbare Visualisierungseinheit, beispielsweise einen sogenannten Touchscreen, verwendet wird.

Eine andere Variante des Verfahrens sieht vor, dass mit einem Datenstromgenerator die Betriebsdaten zu einem speicherbaren Datenstrom kombiniert werden.

Eine weitere Variante des Verfahrens sieht vor, dass der speicherbare Datenstrom als Datenstrom ausgebildet wird, in welchem die Betriebsdaten in zeitlicher Reihenfolge ihrer Abarbeitung aufeinanderfolgen.

Eine zweckmäßige Variante des Verfahrens sieht vor, dass der Datenstrom in der Aufnahme-/Wiedergabeeinheit als Datenfile gespeichert wird.

Eine Variante sieht ferner vor, dass mit der Aufnahme-/Wiedergabeeinheit der Datenstrom so reproduziert wird, dass eine der Funktionen mittels der Visualisierungssteuerung und der Visualisierungseinheit dargestellt und/oder die reale Werkzeugmaschine mit diesem Datenstrom gesteuert wird.

Eine Variante sieht außerdem vor, dass von der Funktionsgeneratoreinheit als Betriebsdaten Lagedaten und /oder Steuerdaten erzeugt werden.

Bei einer weiteren Variante ist vorgesehen, dass die Betriebsdaten Lagedaten und/oder Steuerdaten entsprechen, wie sie von konventionellen Werkzeugmaschinensteuerungen, vorzugsweise programmierbaren Werkzeugmaschinensteuerungen, generiert werden.

Bei einer Ausführung des Verfahrens ist vorgesehen, dass die Lagedaten frei von Werkzeugkorrekturdaten sind.

Bei einer anderen Ausführung des Verfahrens ist vorgesehen, dass in einem Werkzeugkorrekturmodul die Lagedaten mit Werkzeugkorrekturdaten korrigiert und Lageinformationen generiert werden.

Bei einer zweckmäßigen Ausführung des Verfahrens ist vorgesehen, dass in dem Werkzeugkorrekturmodul werkzeugspezifische Werkzeugkorrekturdaten, aufrufbar durch Werkzeugkorrekturadressen, gespeichert werden.

Insbesondere ist vorgesehen, dass dem Werkzeugkorrekturmodul Werkzeugkorrekturadressen zur Auffindung der dem jeweiligen Werkzeug entsprechenden Werkzeugkorrekturdaten übermittelt werden.

Bei einer Lösung des Verfahrens ist vorgesehen, dass die Werkzeugkorrekturadressen in der Funktionsdatengeneratoreinheit erzeugt werden.

Bei einer weiteren Lösung des Verfahrens ist vorgesehen, dass von einem Lageregler aus Lageinformationen Regelinformationen erzeugt werden.

Bei einer zweckmäßigen Lösung ist vorgesehen, dass die Visualisierungssteuerung die Regelinformationen erhält und auf der Basis derselben die Darstellung der virtuellen Werkzeugmaschine auf der Visualisierungseinheit mit den Regelinformationen entsprechenden Funktionsabläufen erzeugt wird.

Bei einer anderen Lösung ist vorgesehen, dass mit einer Anpasssteuerung aus Steuerdaten Aktorsignale generiert werden.

Bei einer günstigen Lösung ist vorgesehen, dass mit der Visualisierungssteuerung auf der Basis der Aktorsignale die Darstellung der virtuellen Werkzeugmaschine mit den den Aktorsignalen entsprechenden Funktionen erzeugt wird.

Zweckmäßigerweise ist vorgesehen, dass mit einem Positionsdatengenerator Positionsdaten der Interaktionseinheit erfasst und aus diesen die Lagedaten generiert werden.

Insbesondere ist bei einer Lösung vorgesehen, dass der Positionsdatengenerator von den von der Interaktionseinheit erhaltenen Positionsdaten Werkzeugkorrekturdaten subtrahiert.

Beispielsweise sieht eine weitere Lösung vor, dass die Funktionsdatengeneratoreinheit einen Werkzeugkorrekturgenerator aufweist, mit dem Werkzeugkorrekturdaten von der Interaktionseinheit erfasst werden.

Außerdem sieht eine Variante vor, dass mit dem Werkzeugkorrekturgenerator Werkzeugkorrekturdaten erfasst und abgespeichert werden.

Insbesondere ist bei einer Version vorgesehen, dass mit dem Werkzeugkorrekturgenerator Werkzeugkorrekturadressen generiert werden.

Beispielsweise ist bei einer anderen Version vorgesehen, dass die Funktionsdatengeneratoreinheit einen Steuerdatengenerator aufweist, der Steuervorgaben von der Interaktionseinheit erfasst.

Schließlich sieht eine Version vor, dass mit dem Steuerdatengenerator aus den Steuervorgaben die Steuerdaten generiert werden.

Ein Einsatz des erfindungsgemäßen Verfahrens erfolgt insbesondere bei einem Steuerungssystem für eine einen Arbeitsraum und in diesem angeordnete Bearbeitungseinheiten aufweisende Werkzeugmaschine umfassend eine Visualisierungssteuerung, welche basierend auf Betriebsdaten sowie basierend auf einem abgespeicherten Maschinenmodell auf einer Visualisierungseinheit die Werkzeugmaschine mindestens im Bereich ihres Arbeitsraums mittels Visualisierungselementen als virtuelle Werkzeugmaschine mit in einem virtuellen Arbeitsraum vorgesehenen virtuellen Bearbeitungseinheiten sowie deren Funktionen als virtuelle Funktionen darstellt.

Derartige Steuerungssysteme sind aus dem Stand der Technik bekannt. Diese Steuerungssysteme arbeiten als konventionelle programmierbare Steuerungssysteme, beispielsweise CNC-Steuerungssysteme, und erlauben zusätzlich mittels der Visualisierungssteuerung und der Visualisierungseinheit durch die Betriebsdaten vorgebbare Funktionen der Werkzeugmaschine als virtuelle Funktionen darzustellen und somit beispielsweise die Funktionsfähigkeit eines Teileprogramms zur Steuerung der Werkzeugmaschine zu erfassen und/oder auszutesten, wobei das Teileprogramm in konventioneller Weise durch Generierung von Datensätzen erzeugt wird.

Der Erfindung liegt daher die Aufgabe zugrunde, ein Steuerungssystem der gattungsgemäßen Art einfacher bedienbar zu gestalten.

Diese Aufgabe wird durch ein Steuerungssystem der eingangs beschriebenen Art erfindungsgemäß dadurch gelöst, dass der Visualisierungseinheit eine Interaktionseinheit zugeordnet ist, welche eine manuelle Interaktion erlaubt, dass der Visualisierungseinheit eine Funktionswahleinheit zugeordnet ist, welche eine Zuordnung mindestens einer Funktion der Werkzeugmaschine zu dieser manuellen Interaktion erlaubt und dass eine Funktionsdatengeneratoreinheit vorgesehen ist, welche der manuellen Interaktion unter Berücksichtung der zugeordneten Funktion entsprechende Betriebsdaten erzeugt und diese Betriebsdaten der Visualisierungssteuerung zur Darstellung der durch die manuelle Interaktion vorgegebenen Funktion auf der Visualisierungseinheit mittels den Visualisierungselementen übermittelt.

Der Vorteil der erfindungsgemäßen Lösung ist darin zu sehen, dass diese die Möglichkeit schafft, aufgrund einer manuellen Interaktion in Verbindung mit einer Zuordnung dieser manuellen Interaktion zu einer Funktion der Werkzeugmaschine virtuelle Funktionen der Werkzeugmaschine zu generieren und auf der Visualisierungseinheit mit den Visualisierungselementen darzustellen.

Damit besteht abweichend von den bislang bekannten Lösungen die Möglichkeit, Betriebsdaten durch manuelle Interaktion zu generieren und die Auswirkungen der manuellen Interaktion unter Berücksichtigung der zugeordneten Funktion auf der Visualisierungseinheit mittels den Visualisierungselementen darzustellen.

Damit können nicht nur in einfacher Art und Weise Betriebsdaten generiert werden, sondern diese können hinsichtlich der durch diese erzeugten Funktionen auf der virtuellen Werkzeugmaschine als virtuelle Funktionen dargestellt und somit hinsichtlich ihrer Eignung und Präzision unmittelbar während der manuellen Interaktion optimal generiert werden.

Alternativ oder ergänzend dazu sieht eine weitere Lösung der erfindungsgemäßen Aufgabe vor, dass der Visualisierungseinheit einer Interaktionseinheit zugeordnet ist, welche eine manuelle Interaktion erlaubt, dass der Visualisierungseinheit eine Funktionswahleinheit zugeordnet ist, welche eine Zuordnung einer Funktion der Werkzeugmaschine zu dieser manuellen Interaktion erlaubt, und dass eine Funktionsdatengeneratoreneinheit vorgesehen ist, welche der manuellen Interaktion unter Berücksichtigung der zugeordneten Funktion entsprechende Betriebsdaten erzeugt und diese Betriebsdaten in einer Aufnahme/Wiedergabeeinheit speichert.

Der Vorteil dieser Lösung ist der, dass sich mit dieser Betriebsdaten zur Steuerung der Werkzeugmaschine in einfacher Weise, nämlich durch die manuelle Interaktion, unter Berücksichtigung der durch die virtuelle Werkzeugmaschine dargestellten Verhältnisse erzeugen lassen.

Die manuelle Interaktion könnte grundsätzlich zeitverzögert auf der Visualisierungseinheit darstellbar sein.

Beispielsweise wäre es denkbar, die Betriebsdaten zu speichern und dann die manuelle Interaktion aufgrund der gespeicherten Betriebsdaten auf der Visualisierungseinheit zeitverzögert darzustellen.

Besonders günstig für die Ausführung der manuellen Interaktion ist es, wenn die manuelle Interaktion zeitgleich, vorzugsweise zeitsynchron, durch die Visualisierungselemente darstellbar ist, da damit ein Nutzer die Möglichkeit hat, unmittelbar die Auswirkungen der manuellen Interaktion auf die virtuelle Werkzeugmaschine, insbesondere auf virtuelle Bearbeitungseinheiten der virtuellen Werkzeugmaschine, zu erkennen und somit festzustellen, ob die durch die manuelle Interaktion vorgegebene Funktion zu einem sinnvollen Ergebnis führt oder nicht.

Um die manuelle Einwirkung unmittelbar überprüfen zu können, ist vorzugsweise vorgesehen, dass die manuelle Einwirkung auf die Interaktionseinheit durch ein durch diese steuerbares und auf der Visualisierungseinheit vorgesehenes Interaktionsvisualisierungselement darstellbar ist.

Der Vorteil dieser Lösung ist darin zu sehen, dass die manuelle Einwirkung nicht nur durch die Ausführung der Funktion auf der virtuellen Werkzeugmaschine überprüft werden kann, sondern gleichzeitig eine erste Überprüfung der manuellen Einwirkung dadurch möglich ist, dass das Interaktionsvisualisierungselement ebenfalls auf der Visualisierungseinheit dargestellt wird und somit eine Bedienungsperson bereits aufgrund des Interaktionsvisualisierungselements die Ausführung der Funktion erkennen kann und zusätzlich überprüfen kann, wie sich die Ausführung der Funktion auf die virtuelle Werkzeugmaschine und die Visualisierungselemente selbst auswirkt.

Mit der manuellen Interaktionseinheit lassen sich in unterschiedlichster Weise die Funktionen vorgeben und dann visualisieren.

Eine Lösung sieht vor, dass mittels der Interaktionseinheit die Funktion als Bewegung vorgebbar und mittels der Visualisierungssteuerung auf der virtuellen Werkzeugmaschine als Bewegung von mindestens einem der Visualisierungselemente visualisierbar ist.

Dies bedeutet insbesondere, dass die manuelle Interaktion als Bewegung ausgeführt wird und diese Bewegung dann durch eines der Visualisierungselemente dargestellt wird, insbesondere ist dies dann sinnvoll, wenn das die Bewegung darstellende Visualisierungselement eine virtuelle Bearbeitungseinheit repräsentiert, so dass durch die manuelle Interaktionseinheit die Möglichkeit besteht, virtuelle Bearbeitungseinheiten der virtuellen Werkzeugmaschine zu bewegen und dadurch beispielsweise Bewegungen bei einem Anfahren eines Werkstücks zur Bearbeitung und/oder auch Bewegungen bei der Bearbeitung des Werkstücks manuell durch Bewegen der Interaktionseinheit vorzugeben.

Eine andere vorteilhafte Lösung sieht vor, dass mit der Interaktionseinheit die Funktion durch Antasten eines ein Visualisierungselement darstellendes Ausführungsfeld auf der Visualisierungseinheit vorgebbar und mittels der Visualisierungssteuerung in ihrer Ausführung auf der virtuellen Werkzeugmaschine visualisierbar ist. Insbesondere ist vorgesehen, dass mit der Interaktionseinheit die Funktion durch Antasten eines Funktionsfeldes auf der Visualisierungseinheit vorgebbar und mittels der Visualisierungssteuerung in ihrer Ausführung auf der virtuellen Werkzeugmaschine visualisierbar ist.

Diese Lösung ist insbesondere dann vorgesehen, wenn die Funktion durch die Visualisierungselemente ungünstig auf der Visualisierungseinheit darstellbar ist, beispielsweise eine Schaltfunktion ist, deren Auswirkung ungünstig darstellbar ist. In diesem Fall ist die Darstellung eines Ausführungsfeldes als Visualisierungselement zum Vorgeben der Funktion eine geeignete Maßnahme.

Die Zuordnung der Funktion der Werkzeugmaschine zu der jeweiligen manuellen Interaktion könnte auf unterschiedlichste Art und Weise erfolgen.

Beispielsweise wäre es denkbar, die Funktionswahleinheit mit einer eigenständigen Eingabeeinheit, beispielsweise einem Tastenfeld, zu versehen, mit welchem die manuelle Interaktion der Funktion zugeordnet werden kann.

Eine besonders günstige Lösung sieht jedoch vor, dass mit der Interaktionseinheit die jeweils der manuellen Interaktion zuzuordnende Funktion auswählbar ist.

Das heißt, dass die Aktionseinheit nicht nur zur manuellen Vorgabe einer Ausführung der Funktion dient, sondern auch dazu dienen kann, beispielsweise vor oder nach der durchzuführenden manuellen Interaktion dieser manuellen Interaktion eine Funktion der Werkzeugmaschine zuzuordnen.

Eine derartige Auswahl der Funktion mittels der Interaktionseinheit kann in unterschiedlichster Art und Weise erfolgen.

Beispielsweise ist es denkbar, der Interaktionseinheit separate Anzeigen für die Auswahl der Funktion zur Verfügung zu stellen.

Eine besonders günstig bedienbare Lösung sieht jedoch vor, dass die Auswahl der Funktion durch Aufrufen mindestens eines der Visualisierungselemente erfolgt.

Ein derartiges Aufrufen mindestens eines der Visualisierungselemente könnte ebenfalls in unterschiedlicher Art und Weise, beispielsweise durch Umfahren eines Visualisierungselements erfolgen.

Eine besonders günstige Lösung sieht jedoch vor, dass das Aufrufen des mindestens einen der Visualisierungselemente durch Anfahren und Antasten des mindestens einen der Visualisierungselemente mit Hilfe der Interaktionseinheit erfolgt.

Die Auswahl einer Funktion kann dabei von der Visualisierungseinheit in unterschiedlicher Art und Weise angezeigt werden.

Eine Möglichkeit ist die, dass bei Auswahl der Funktion das die Funktion repräsentierende Visualisierungselement auf der Visualisierungseinheit hervorgehoben erscheint.

Eine hervorgehobene Erscheinung eines derartigen Visualisierungselements ist beispielsweise durch eine veränderte Helligkeit oder eine veränderte Farbstellung des Visualisierungselements erreichbar.

Insbesondere ist vorgesehen, dass ein Aufrufen der jeweiligen Funktion eine Darstellung des Visualisierungselements dieser Funktion zur Folge hat.

Alternativ oder ergänzend hierzu ist es auch denkbar, dass ein Aufrufen der jeweiligen Funktion erst eine Darstellung der Visualisierungselemente dieser Funktion zur Folge hat.

Beispielsweise ist es denkbar, dass ein Aufruf einer eine Bewegung eines Visualisierungselements betreffenden Funktion zur Folge hat, dass das die Funktion repräsentierende Visualisierungselement auf der Visualisierungseinheit zusätzlich zu dem vorhandenen Visualisierungselement eingeblendet wird und beispielsweise dann, wenn diese Funktion abgewählt wird, wieder ausgeblendet wird.

Prinzipiell ist es bei dem erfindungsgemäßen Steuerungssystem denkbar, Funktionen unbeschränkt zuzulassen. Dies hat jedoch den Nachteil, dass bei der Übernahme der der Funktionsdatengeneratoreinheit erzeugten Lagedaten und/oder Steuerdaten für die Steuerung der realen Werkzeugmaschine wiederum Probleme auftreten, da die Funktionen teilweise bei der realen Werkzeugmaschine nicht realisierbar sein könnten.

Aus diesem Grund ist vorzugsweise vorgesehen, dass in dem Maschinenmodell die möglichen Funktionen der realen Werkzeugmaschine gespeichert sind und dass die Funktionswahleinheit die zuzuordnenden Funktionen auf die möglichen Funktionen der realen Werkzeugmaschine begrenzt.

Um die Bedienungsperson weiter optimal zu unterstützen, ist vorzugsweise vorgesehen, dass die möglichen Funktionen der realen Werkzeugmaschine auf der Visualisierungseinheit mittels Visualisierungselementen darstellbar sind. Damit kann die Bedienungsperson optisch durch die Darstellung der den möglichen Funktionen entsprechenden Visualisierungselemente bei der manuellen Vorgabe der Funktionen so geführt werden, dass die manuelle Vorgabe nur im Rahmen der möglichen Funktionen erfolgt und dies auch für die Bedienungsperson sofort erkennbar ist.

Hinsichtlich der Art der Funktionen wurden im Zusammenhang mit der bisherigen Erläuterung der erfindungsgemäßen Lösung keine weiteren Angaben gemacht.

So ist beispielsweise vorgesehen, dass mindestens eine der Funktionen der Werkzeugmaschine eine Bewegung einer Bearbeitungseinheit relativ zu mindestens einer anderen Bearbeitungseinheit umfasst.

Ferner kann beispielsweise mindestens eine der Funktionen der Werkzeugmaschine ein Aktivieren einer Bearbeitungseinheit betreffen.

Beispielsweise kann mindestens eine andere der Funktionen der Werkzeugmaschine eine Schaltbewegung einer Bearbeitungseinheit betreffen.

Hinsichtlich der Art der Visualisierungselemente wurden bislang keine näheren Angaben gemacht.

So ist vorzugsweise vorgesehen, dass mindestens eines der Visualisierungselemente ein graphisches Visualisierungselement ist.

Unter einem graphischen Visualisierungselement ist ein graphisches Element zu verstehen, das entweder ein Abbild einer Bearbeitungseinheit ist oder ein graphisches Symbol, welches eine Bearbeitungseinheit, eine Funktion einer Bearbeitungseinheit oder eine Stellung der Bearbeitungseinheit symbolisiert.

Alternativ oder ergänzend dazu ist vorgesehen, dass mindestens eines der Visualisierungselemente ein Funktionsfeld ist.

Unter einem Funktionsfeld ist ein Feld zu verstehen, in welchem Funktionsangaben in Schriftform oder Zahlenform dargestellt sind.

Hinsichtlich der Visualisierungselemente wurden ebenfalls im Zusammenhang mit der bisherigen Erläuterung der erfindungsgemäßen Lösung keine spezifischen Angaben gemacht.

So ist beispielsweise vorgesehen, dass mindestens eines der Visualisierungselemente eine virtuelle Bearbeitungseinheit darstellt.

In diesem Fall wird insbesondere das Visualisierungselement ein graphisches Visualisierungselement sein, mit welchem sich entweder schematisch oder als mehr oder weniger präzises Bild die Bearbeitungseinheit darstellen lässt.

Beispielsweise ist ferner vorgesehen, dass mindestens eines der Visualisierungselemente ein Werkzeug darstellt.

Auch in diesem Fall ist vorzugsweise das Visualisierungselement ein graphisches Visualisierungselement, welches entweder schematisch eine Außenkontur des Werkzeugs darstellt oder bevorzugt zumindest eine Schneidenkontur präzise darstellt.

Da bei einem Werkzeug jedoch nicht nur dessen Außenkontur oder Schneidenkontur darzustellen ist, sondern es auch darauf ankommt, gegebenenfalls zu einem Werkzeug Werkzeugkorrekturdaten einzugeben, ist vorzugsweise zusätzlich zu einem graphischen Visualisierungselement gegebenenfalls noch ein Anzeigefeld vorgesehen, über welches Werkzeugkorrekturdaten eingebbar sind.

Ferner ist beispielsweise ebenfalls vorgesehen, dass mindestens eines der Visualisierungselemente ein virtuelles Werkstück darstellt.

Auch in diesem Fall ist das Visualisierungselement vorzugsweise ein graphisches Visualisierungselement, welches entweder die Außenkontur des Werkstücks schematisch oder bevorzugt möglichst präzise darstellt, um die für die Bearbeitung des Werkstücks erforderlichen Maßrelationen möglicht präzise auf der Visualisierungseinheit wiedergeben zu können.

Hinsichtlich der Ausbildung der Interaktionseinheit sind die unterschiedlichsten Lösungen denkbar.

So sieht eine vorteilhafte Lösung vor, dass die Interaktionseinheit zur Erfassung der manuellen Interaktion eine Handbedieneinheit, insbesondere eine Computermaus, umfasst.

Alternativ oder ergänzend hierzu ist vorgesehen, dass die Interaktionseinheit zur Erfassung der manuellen Interaktion eine berührungssteuerbare Visualisierungseinheit, beispielsweise einen sogenannten Touchscreen, umfasst.

Um die Betriebsdaten nicht nur zur visuellen Darstellung im Zusammenhang mit der virtuellen Werkzeugmaschine einzusetzen, sondern gegebenenfalls auch speichern und erneut einsetzen zu können, ist vorzugsweise ein Datenstromgenerator vorgesehen, welcher die Betriebsdaten zu einem speicherbaren Datenstrom, insbesondere einen zeitsynchronen Datenstrom, kombiniert.

Unter einem zeitsynchronen Datenstrom ist dabei zu verstehen, dass dieser nicht nur die zeitlich richtige Abfolge der Daten aufweist, sondern die exakte Zeit-Lage-Synchronisation der Daten, beispielsweise beim Bahnfahren durch Kombination von Bewegungen in Richtung mindestens zweier Bewegungsachsen.

Vorzugsweise ist dabei der speicherbare Datenstrom als Datenstrom ausgebildet, in welchem die Betriebsdaten in zeitlicher Reihenfolge ihrer Abarbeitung aufeinanderfolgen.

Um den Datenstrom speichern zu können, ist vorzugsweise die Aufnahme-/Wiedergabeeinheit vorgesehen, in welcher der Datenstrom als Datenfile speicherbar ist.

Mit einer derartigen Aufnahme-/Wiedergabeeinheit lässt sich ein einmal erzeugter Datenstrom vorteilhaft speichern, um damit die in diesem Datenstrom enthaltenen Funktionen zu einem späteren Zeitpunkt erneut prüfen und/oder korrigieren und/oder ergänzen zu können.

Darüber hinaus ist die Aufnahme-/Wiedergabeeinheit geeignet, den Datenstrom so zu reproduzieren, dass eine Wiedergabe der Funktion mittels der Visualisierungssteuerung und der Visualisierungseinheit und/oder eine Steuerung der realen Werkzeugmaschine mit diesem Datenstrom möglich ist.

Insbesondere reproduziert die Aufnahme-/Wiedergabeeinheit den Datenstrom so, dass eine der Funktion mittels der Visualisierungssteuerung und der Visualisierungseinheit darstellbar und/oder die reale Werkzeugmaschine mit diesem Datenstrom steuerbar ist.

Hinsichtlich der Art der von der Funktionsdatengeneratoreinheit generierten Daten wurden bislang keine näheren Angaben gemacht.

So wäre es prinzipiell denkbar, jede Art von Datenstruktur bei diesen Daten vorzusehen.

Eine vorteilhafte Lösung sieht vor, dass die Funktionsdatengeneratoreinheit als Betriebsdaten Lagedaten und/oder Steuerdaten erzeugt.

Derartige Betriebsdaten entsprechen Lagedaten und/oder Steuerdaten, vorzugsweise hinsichtlich ihrer Struktur Lagedaten und/oder Steuerdaten, wie sie von konventionellen Werkzeugmaschinensteuerungen, vorzugsweise programmierbaren Werkzeugmaschinensteuerungen, insbesondere CNC-Steuerungen, generiert werden.

Vorzugsweise sind die Lagedaten frei von Werkzeugkorrekturdaten, das heißt werkzeugneutral, so dass mit diesen je nach Abmessungen des eingesetzten Werkzeugs mit entsprechenden Werkzeugkorrekturdaten korrigierbar sind.

Vorzugsweise ist ferner vorgesehen, dass das Steuerungssystem ein Werkzeugkorrekturmodul umfasst, welches die Lagedaten mit Werkzeugkorrekturdaten korrigiert und Lageinformationen generiert.

Hinsichtlich der Arbeitsweise des Werkzeugkorrekturmoduls wurden keine weiteren Angaben gemacht.

Eine vorteilhafte Lösung sieht vor, dass in dem Werkzeugkorrekturmodul werkzeugspezifische Werkzeugkorrekturdaten, aufrufbar durch Werkzeugkorrekturadressen, gespeichert sind.

Um zu dem richtigen Werkzeug die richtige Werkzeugkorrektur im Werkzeugkorrekturmodul zuzuordnen, ist vorzugsweise vorgesehen, dass dem Werkzeugkorrekturmodul Werkzeugkorrekturadressen zur Auffindung der dem jeweiligen Werkzeug entsprechenden Werkzeugkorrekturdaten übermittelbar sind.

Insbesondere ist dabei vorgesehen, dass die Werkzeugkorrekturadressen in der Funktionsdatengeneratoreinheit, insbesondere einem Werkzeugkorrekturgenerator, erzeugbar sind.

Ferner ist vorzugsweise das Steuerungssystem so ausgebildet, dass es einen Lageregler umfasst, welcher aus Lageinformationen Regelinformationen erzeugt.

Derartige Regelinformationen lassen sich bei konventionellen Steuerungen zu unmittelbarer Ansteuerung der verschiedenen Achsantriebe, beispielsweise linearer Achsen oder rotatorischer Achsen, einsetzen.

Grundsätzlich ist es bei der erfindungsgemäßen Lösung möglich, der Visualisierungssteuerung Lagedaten zu übergeben, so dass diese hieraus die Funktionsabläufe erzeugt.

Um jedoch das Zeitverhalten der realen Werkzeugmaschine möglichst weitgehend für die virtuelle Werkzeugmaschine zu übernehmen, ist vorzugsweise vorgesehen, dass die Visualisierungssteuerung die Regelinformationen erhält und auf der Basis derselben die Darstellung der virtuellen Werkzeugmaschine auf der Visualisierungseinheit mit den Regelinformationen entsprechenden Funktionsabläufen erzeugt.

Um die Steuerdaten zu verwerten, ist vorzugsweise eine Anpasssteuerung vorgesehen, welche aus Steuerdaten Aktorsignale generiert.

Derartige Aktorsignale lassen sich dann vorzugsweise zur Ansteuerung von Aktoren, das heißt beispielsweise Antrieben, insbesondere Stellantrieben, einsetzen.

In diesem Fall ist insbesondere vorgesehen, dass die Visualisierungssteuerung auf der Basis der Aktorsignale die Darstellung der virtuellen Werkzeugmaschine mit den den Aktorsignalen entsprechenden Funktionen erzeugt.

Hinsichtlich der Erzeugung der Betriebsdaten wurden bislang keine näheren Angaben gemacht.

So sieht eine vorteilhafte Lösung vor, dass die Funktionsdatengeneratoreinheit mit einem Positionsdatengenerator Positionsdaten der Interaktionseinheit erfasst und aus diesen die Lagedaten generiert.

Insbesondere ist es dabei günstig, wenn der Positionsdatengenerator von den von der Interaktionseinheit erhaltenen Positionsdaten Werkzeugkorrekturdaten subtrahiert, um zu erreichen, dass die dann entstehenden Lagedaten universell mit unterschiedlichen Werkzeugen eingesetzt werden können, da zu diesen Lagedaten dann jeweils die Werkzeugkorrekturdaten hinzuaddiert werden können, je nach eingesetztem Werkzeug.

Ferner ist vorzugsweise vorgesehen, dass die Funktionsdatengeneratoreinheit einen Werkzeugkorrekturdatengenerator aufweist, der Werkzeugkorrekturdaten von der Interaktionseinheit erfasst.

Insbesondere ist vorgesehen, dass mit dem Werkzeugkorrekturgenerator Werkzeugkorrekturdaten erfassbar und abspeicherbar sind.

Dabei ist es beispielsweise denkbar, über die Interaktionseinheit, beispielsweise ein Tastenfeld der Interaktionseinheit, Werkzeugkorrekturdaten in einem Werkzeugkorrekturmodus einzugeben, die dann der Werkzeugkorrekturdatengenerator verarbeitet.

Hierbei arbeitet der Werkzeugkorrekturdatengenerator so, dass dieser Werkzeugkorrekturadressen generiert, unter welchen die Werkzeugkorrekturdaten abgelegt sind und wieder aufgefunden werden können.

Eine weitere vorteilhafte Lösung sieht vor, dass die Funktionsdatengeneratoreinheit einen Steuergenerator aufweist, welcher Steuervorgaben von der Interaktionseinheit erfasst.

Dabei ist zweckmäßigerweise vorgesehen, dass der Steuerdatengenerator aus den Steuervorgaben die Steuerdaten generiert.

Bei einer günstigen Lösung ist vorgesehen, dass mit der Visualisierungssteuerung auf der Basis der Aktorsignale die Darstellung der virtuellen Werkzeugmaschine mit den den Aktorsignalen entsprechenden Funktionen erzeugt wird.

Zweckmäßigerweise ist vorgesehen, dass mit einem Positionsdatengenerator Positionsdaten der Interaktionseinheit erfasst und aus diesen die Lagedaten generiert werden.

Insbesondere ist bei einer Lösung vorgesehen, dass der Positionsdatengenerator von den von der Interaktionseinheit erhaltenen Positionsdaten Werkzeugkorrekturdaten subtrahiert.

Beispielsweise sieht eine weitere Lösung vor, dass die Funktionsdatengeneratoreinheit einen Werkzeugkorrekturgenerator aufweist, mit dem Werkzeugkorrekturdaten von der Interaktionseinheit erfasst werden.

Außerdem sieht eine Variante vor, dass mit dem Werkzeugkorrekturgenerator Werkzeugkorrekturdaten erfasst und abgespeichert werden.

Insbesondere ist bei einer Version vorgesehen, dass mit dem Werkzeugkorrekturgenerator Werkzeugkorrekturadressen generiert werden.

Beispielsweise ist bei einer anderen Version vorgesehen, dass die Funktionsdatengeneratoreinheit einen Steuerdatengenerator aufweist, der Steuervorgaben von der Interaktionseinheit erfasst.

Schließlich sieht eine Version vor, dass mit dem Steuerdatengenerator aus den Steuervorgaben die Steuerdaten generiert werden.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine Frontansicht eines ersten Ausführungsbeispiels einer erfindungsgemäßen Werkzeugmaschine;
- Fig. 2: eine schematische Darstellung eines erfindungsgemäßen Steuerungssystems mit dessen Komponenten;
- Fig. 3: eine schematische Darstellung einer Programmstruktur des erfindungsgemäßen Steuerungssystems;
- Fig. 4: eine erweiterte Darstellung der Programmstruktur des erfindungsgemäßen Steuerungssystems insbesondere detailliert hinsichtlich der Möglichkeiten der manuellen Interaktion und der Komponenten zur Erzeugung von Betriebsdaten aufgrund der manuellen Interaktion;
- Fig. 5: eine Ansicht eines Bildschirms einer Visualisierungseinheit bei einem zweiten Ausführungsbeispiel eines erfindungsgemäßen Steuerungssystems;
- Fig. 6: eine Ansicht ähnlich Fig. 5 bei einem dritten Ausführungsbeispiel eines erfindungsgemäßen Steuerungssystems;
- Fig. 7: eine Ansicht gemäß Fig. 6 des dritten Ausführungsbeispiels mit Darstellung der Bewegungsmöglichkeiten durch graphische Symbole;
- Fig. 8: eine Ansicht gemäß Fig. 7 des dritten Ausführungsbeispiels mit Darstellung einer manuellen Interaktion zur Bewegung einer virtuellen Bearbeitungseinheit, und
- Fig. 9: eine Ansicht ähnlich Fig. 5 bei einem vierten Ausführungsbeispiel eines erfindungsgemäßen Steuerungssystems.

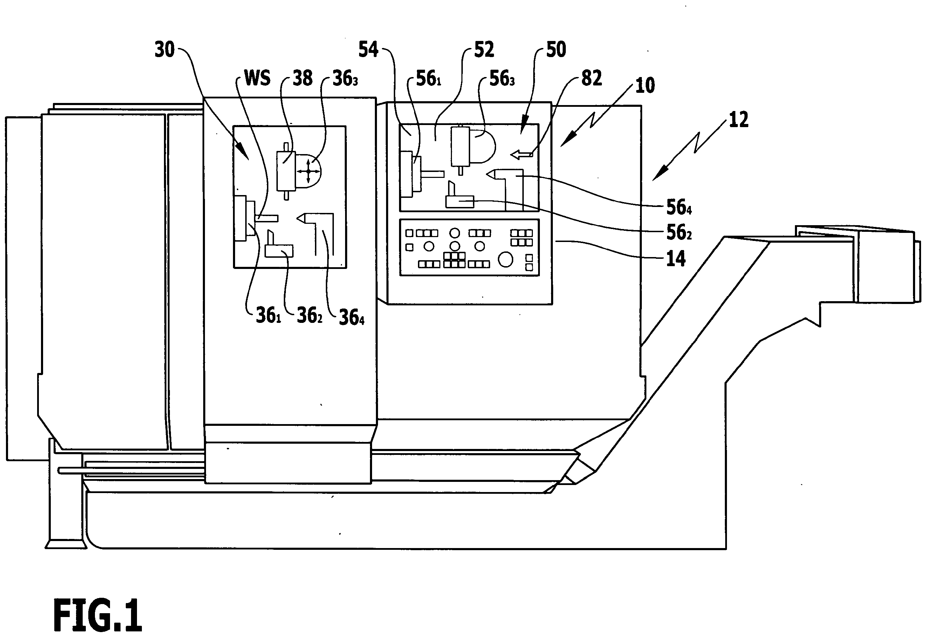

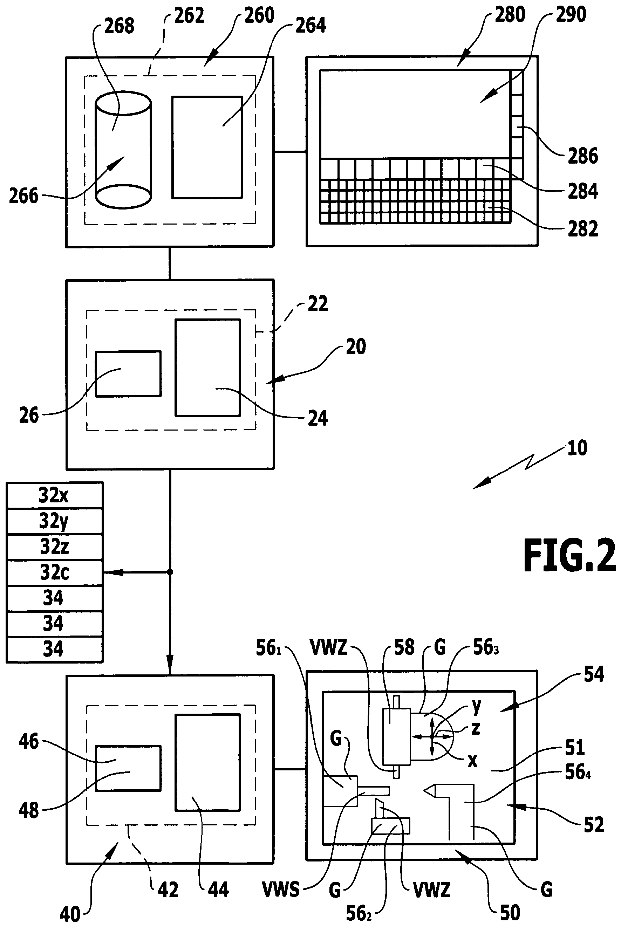

Ein in Fig. 1 dargestelltes erstes Ausführungsbeispiel eines erfindungsgemäßen Steuerungssystems 10 für eine reale Werkzeugmaschine 12 ist beispielsweise an einer Maschinenverhaubung 14 der Werkzeugmaschine 12 gehalten und umfasst, wie in Fig. 2 dargestellt, als Teil einer konventionellen, mit Steuerdatensätzen arbeitenden Werkzeugmaschinensteuerung eine Aktionssteuerung 20 mit einer Datenverarbeitungseinheit 22, welche einen Prozessor 24 und einen Speicher 26 umfasst.

Die reale Werkzeugmaschine 12 ist mit in einem realen Arbeitsraum 30 angeordneten realen Bearbeitungseinheiten 36₁, 36₂, 36₃, 36₄ versehen, die durch reale Achsantriebe 32 relativ zueinander bewegbar sind, um ein Werkstück WS im Arbeitsraum 30 zu bearbeiten.

Mit der Aktionssteuerung 20 sind in konventioneller Art und Weise, vorgegeben durch die Steuerdatensätze, die Achsantriebe 32, beispielsweise die Achsantriebe 32ₓ, 32_{y}, 32_{Z} und 32_{C} der realen Werkzeugmaschine 12, steuerbar, die beispielsweise zur Ausführung der realen Achsbewegungen realer Bearbeitungseinheiten 36₁, 36₂, 36₃, 36₄ in einem realen Arbeitsraum 30 der realen Werkzeugmaschine 12 in Richtung der X-Achse, Y-Achse, Z-Achse und C-Achse vorgesehen sind.

Beispielsweise sind die Achsantriebe 32ₓ, 32_{y} und 32_{z} der als Werkzeugträger ausgebildeten Bearbeitungseinheit 36₃ zugeordnet, um diese in Richtung der X-Achse, der Y-Achse und der Z-Achse relativ zu der das Werkstück WS tragenden Bearbeitungseinheit 36₁ zu bewegen und der Achsantrieb 32_{c} ist der als Werkstückspindel ausgebildeten Bearbeitungseinheit 36₁ zugeordnet und erlaubt einen Drehantrieb der Werkstückspindel sowie eine Drehpositionierung der Werkstückspindel. Ähnliche Zuordnungen sind beispielsweise auch für die Bearbeitungseinheit 36₂ mit weiteren Achsantrieben vorgesehen.

Ferner sind mit der Aktionssteuerung 20 noch zusätzlich auch Aktoren 34 steuerbar, welche beispielsweise dazu dienen, Schaltbewegungen von Werkzeugträgern, beispielsweise einem Werkzeugrevolver 38 der Bearbeitungseinheit 36₃, oder Einschwenkbewegungen von anderen Bearbeitungseinheiten, zum Beispiel einer als Reitstock ausgebildeten Bearbeitungseinheit 36₄, zu veranlassen.

Außerdem ist mit der Aktionssteuerung 20 auch eine als Ganzes mit 40 bezeichnete Visualisierungssteuerung ansteuerbar, welche eine Datenverarbeitungseinheit 42 mit einem Prozessor 44 und einem Speicher 46 umfasst, in welchem ein Maschinenmodell 48 gespeichert ist, das die geometrischen Konfigurationen von den in dem Arbeitsraum 30 der Werkzeugmaschine 12 vorliegenden örtlichen Gegebenheiten sowie die geometrischen und funktionellen Konfigurationen von den im Arbeitsraum der Werkzeugmaschine 12 vorgesehenen Bearbeitungseinheiten 36 sowie möglichen Werkzeugen und Werkstücken berücksichtigt, so dass das Maschinenmodell 48 sämtliche Informationen zur Abbildung der realen Gegebenheiten hinsichtlich geometrischer Konfiguration als auch funktioneller Konfiguration zur Verfügung hat.

Mit der Visualisierungssteuerung 40 ist eine als Ganzes mit 50 bezeichnete Visualisierungseinheit ansteuerbar, auf deren Bildschirm 51 eine der realen Werkzeugmaschine 12 hinsichtlich geometrischer und funktioneller Konfiguration entsprechend virtuelle Werkzeugmaschine 52, beispielsweise mit ihrem einen virtuellen Arbeitsraum 54 betreffenden Teilbereich, darstellbar ist, und zwar mit graphischen Elementen G, welche beispielsweise in dem virtuellen Arbeitsraum 54 der virtuellen Werkzeugmaschine 52 angeordnete virtuelle Bearbeitungseinheiten 56₁, 56₂, 56₃, 56₄ repräsentieren, wobei beispielsweise die virtuelle Bearbeitungseinheit 56₁ der realen Bearbeitungseinheit 36₁ entspricht und beispielsweise eine Werkstückspindel darstellt, in welcher ein Werkstück WS aufnehmbar ist.

Ferner ist beispielsweise als virtuelle Bearbeitungseinheit 56₂ ein der realen Bearbeitungseinheit 36₂ entsprechender erster Werkzeugträger vorgesehen, welcher in X-, Y- und Z-Richtung relativ zum Werkstück WS bewegbar ist.

Als weitere Bearbeitungseinheit 56₃ ist beispielsweise ein der realen Bearbeitungseinheit 36₃ entsprechender zweiter Werkzeugträger vorgesehen, welcher einen Werkzeugrevolver 58 umfasst, auf welchem eine Vielzahl von Werkzeugen WZ angeordnet und durch eine Schaltbewegung des virtuellen Werkzeugrevolvers 58 in Arbeitsposition gebracht werden kann.

Schließlich ist beispielsweise als vierte virtuelle Bearbeitungseinheit 56₄ ein der realen Bearbeitungseinheit entsprechender sogenannter Reitstock vorgesehen, welcher dazu dient, das Werkstück WS gegebenenfalls abzustützen.

Die Visualisierungssteuerung 40 dient dazu, sämtliche virtuellen und den realen Bearbeitungseinheiten 36 entsprechenden Bearbeitungseinheiten 56 der virtuellen Werkzeugmaschine 52 auf dem Bildschirm 51 als graphische Elemente darzustellen, und zwar einerseits mit ihren geometrischen Merkmalen und andererseits mit ihren funktionellen Merkmalen, das heißt insbesondere den bei der realen Werkzeugmaschine 12 vorgesehenen Funktionen, wie beispielsweise Bewegungsmöglichkeiten, der realen Bearbeitungseinheiten 36, wobei diese Funktionen nicht nur die jeweiligen vorgesehenen Achsbewegungen umfassen, sondern auch die im Zusammenhang mit den Achsbewegungen vorgesehenen dynamischen Parameter.

Damit ist mit der Visualisierungssteuerung 40 auf dem Bildschirm 51 die virtuelle Werkzeugmaschine 52 mit ihren virtuellen Bearbeitungseinheiten 56 Werkzeugen WZ und Werkstücken WS so bewegbar, wie die reale Werkzeugmaschine 12, und zwar sowohl hinsichtlich der geometrischen Verhältnisse als auch der Bewegungsverhältnisse einschließlich der Bewegungsdynamik.

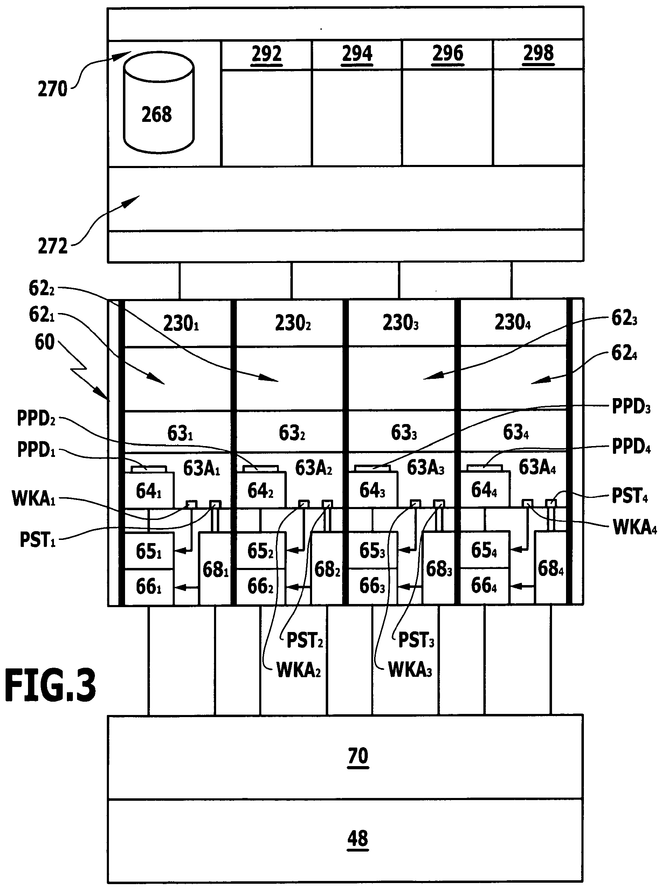

Wie in Fig. 3 im Detail dargestellt, läuft auf der Datenverarbeitungseinheit 22 ein Steuerungsprogramm 60, in welchem die einzelnen Achsbewegungen, die zu einer Bearbeitung eines Werkstücks erforderlich sind, in Kanälen 62, beispielsweise den Kanälen 62₁, 62₂, 62₃, 62₄, zusammengefasst abgearbeitet werden, wobei in jedem Kanal 62 von einer Satzaufbereitung 63, welche beispielsweise die NC-Sätze des Steuerprogramms 60 interpretiert, in einer Ausgangsstufe 63A der Satzaufbereitung 63 Programmpositionsdaten PPD, umfassend Daten für Bewegungen in den Ausrichtungen X, Y, Z, C, Werkzeugkorrekturadressen WKA sowie programmierte Steuerdaten PST generiert werden.

Die Programmpositionsdaten PPD werden einem Interpolator 64 zugeführt.

In dem Interpolator 64 werden dann die einzelnen Achsbewegungen, die in dem jeweiligen Kanal 62 zusammengefasst sind, koordiniert und für die jeweilige Achsbewegung die jeweiligen programmierten Lagedaten PL für die Achsen X, Y, Z, C erzeugt.

Die in dem jeweiligen Kanal 62 erzeugten programmierten Lagedaten PL werden dann einem Werkzeugkorrekturmodul 65 übergeben und in diesem einer Werkzeugkorrektur mit Werkzeugkorrekturdaten WKD unterworfen, wobei die Werkzeugkorrekturdaten WKD in dem Werkzeugkorrekturmodul 65 unter einer Werkzeugkorrekturadresse WKA auffindbar sind, die sich aus dem Steuerungsprogramm 60 ergibt und die in der Satzaufbereitung 63 generiert und von der Ausgangsstufe 63A dem Werkzeugkorrekturmodul 65 übergeben wird.

Diese mit den Werkzeugkorrekturdaten WKD korrigierten Lageinformationen L werden dem Lageregler 66 übermittelt, welcher ausgangsseitig Regelinformationen RI erzeugt und dann die Achsantriebe 32 mit diesen Regelinformationen RI lagegeregelt betreibt.

Die in der Ausgangsstufe 63A erzeugten Steuerdaten ST für die Aktoren 34 werden einer Anpasssteuerung 68 übergeben, welche dann ausgangsseitig Aktorsignale AS für die Aktoren 34 erzeugt, um diese zu betreiben. Dabei kommuniziert die Anpasssteuerung 68 z.B. mit dem Interpolator 64 und lässt eine weitere Ausführung z.B. eines Datensatzes, insbesondere eine NC-Satzes erst dann zu, wenn eine Rückmeldung der Aktoren 34 vorliegt, die eine Ausführung der durch die Steuerdaten vorgegebenen Aktionen der Aktoren 34 bestätigt.

Die Ausgangsstufe 63A stellt durch Übermittlung der Werkzeugkorrekturadresse WKA an dem Werkzeugkorrekturmodul 65 sicher, dass vor Generierung der programmierten Lagedaten PL im Interpolator 64 die Werkzeugkorrekturdaten WKD im Werkzeugkorrekturmodul 65 zur Werkzeugkorrektur der programmierten Lagedaten PL zur Verfügung stehen.

Ferner stellt die Ausgangsstufe 63A sicher, dass bei Erzeugung und Ausgabe der Programmsteuerdaten PST z.B. eine weitere Satzausführung erst nach Ausführung der Aktion des des durch die Steuerdaten ST angesprochenen Aktors 34 erfolgt.

Diese Regelinformationen RI aus dem jeweiligen Lageregler 66 werden wahlweise den Achsantrieben 32 der realen Werkzeugmaschine 12 übermittelt und/oder der Visualisierungssteuerung 40, die, wie in Fig. 3 dargestellt, mit einem Visualisierungsprogramm 70 unter Zuhilfenahme der Daten des Maschinenmodells 48 auf dem Bildschirm 51 der Visualisierungseinheit 50 die virtuelle Werkzeugmaschine 52 mit den virtuellen Bearbeitungseinheiten 56 generiert und die Ausführung und/oder Auswirkungen der Funktionen visualisiert.

Auch die Aktorsignale AS lassen sich wahlweise den Aktoren 34 der realen Werkzeugmaschine 12 und/oder der Visualisierungssteuerung 40 übermitteln, welche mit dem Visualisierungsprogramm 70 unter Zuhilfenahme der Daten des Maschinenmodells 48 in der Lage ist, entweder Aktionen virtueller Aktoren als solche darzustellen oder durch graphische Elemente G zu visualisieren.

Das erfindungsgemäße Visualisierungsprogramm 70 ist dabei nicht nur in der Lage, unter Zuhilfenahme des Maschinenmodells 48 die geometrischen Konfigurationen und Funktionen, insbesondere Bewegungen, der einzelnen virtuellen Bearbeitungseinheiten 56 auf dem Bildschirm 51 darzustellen, sondern auch gegebenenfalls ergänzend zur Darstellung der Bearbeitungseinheiten 56 unter Zuhilfenahme graphischer Symbole 72 die durch die im Maschinenmodell 48 erfasste Konstruktion der realen Werkzeugmaschine möglichen einzelnen Funktionen, insbesondere die Bewegungsmöglichkeiten in Richtung der jeweiligen Achsen und deren Ausrichtung, beispielsweise die X-Achse, Y-Achse, Z-Achse oder C-Achse, auf dem Bildschirm 51 der Visualisierungseinheit 50 darzustellen.

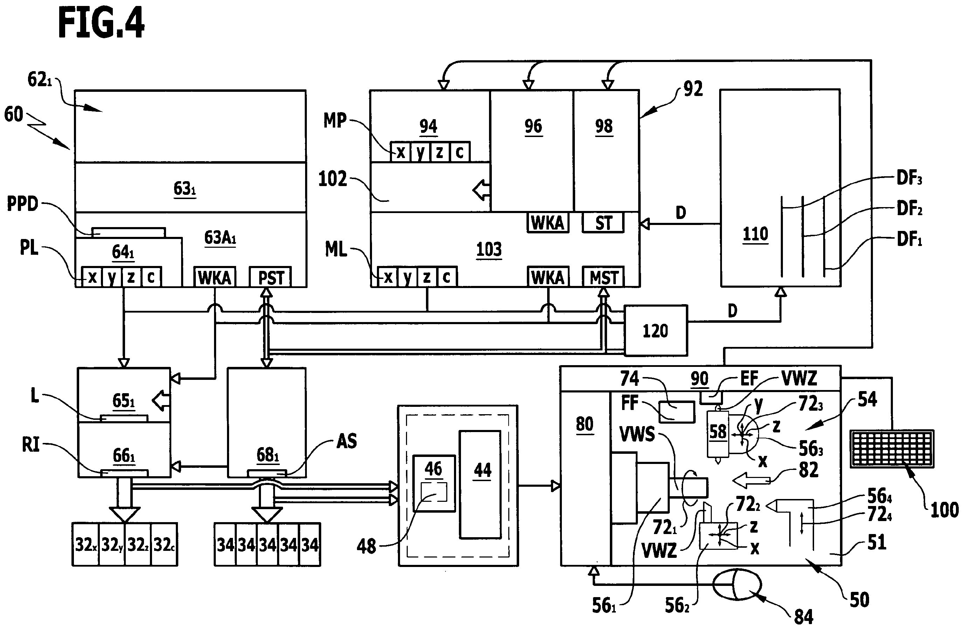

Der Visualisierungssteuerung 40 sowie der Visualisierungseinheit 50 ist noch zusätzlich eine Interaktionseinheit 80 zugeordnet (Fig. 4), mittels welcher ein Cursor 82 auf dem Bildschirm 51 mittels einer Handbedieneinheit 84, beispielsweise einer sogenannten Computermaus, manuell verschiebbar ist.

Ferner besteht mit dem Cursor 82 die Möglichkeit, die für die Bewegungsmöglichkeiten der virtuellen Bearbeitungseinheiten 56 vorgesehenen graphischen Symbole 72 anzufahren und die entsprechende Funktion, beispielsweise die entsprechende Bewegungsmöglichkeiten, durch Antasten oder Anklicken aufzurufen.

Hierzu arbeitet die Interaktionseinheit 80 mit einer als Ganzes mit 90 bezeichneten Funktionswahleinheit zusammen, die ihrerseits mit einer Funktionsdatengeneratoreinheit 92, umfassend einen Positionsdatengenerator 94, einen Werkzeugkorrekturgenerator 96, und einen Steuerdatengenerator 98 gekoppelt ist.

Nach Aufruf der jeweiligen Funktion, deren Bewegungsmöglichkeiten die graphischen Symbole 72 zeigen, beispielsweise der jeweiligen Achsen X, Y, Z, C, mittels des Cursors 82 wird durch Antasten oder Anklicken der jeweiligen virtuellen Bearbeitungseinheit 56 mittels des Cursors 82 diese virtuelle Bearbeitungseinheit 56 für eine Bewegung entsprechend der ausgewählten Bewegungsmöglichkeit ausgewählt und somit die ausgewählte Funktion in Form der Bewegungsmöglichkeit der Bearbeitungseinheit 56 der manuellen Interaktion in Form der Bewegung des Cursors 82 zugeordnet.

Der Positionsdatengenerator 94 ist in der Lage, zu den jeweils mit dem Cursor 82 ausgewählten Bewegungsmöglichkeiten, beispielsweise den Achsen X, Y, Z oder C, die manuellen Positionsdaten MP zu generieren, wobei die manuellen Positionsdaten MP den Positionen der Bahnpunkte in Richtung der jeweils ausgewählten Bewegungsmöglichkeit oder Bewegungsmöglichkeiten, also beispielsweise der Achsen X, Y, Z, C, entsprechen, die ein mit dem Cursor 82 starr gekoppelter Bezugspunkt B bei der Bewegung des Cursors 82 auf dem Bildschirm 52 durchläuft und die dabei von der Interaktionseinheit 80 erfasst und der Funktionsdatengenerierungseinheit 92 übermittelt werden.

Der Bezugspunkt B kann dabei ein Punkt des Cursors 82 selbst sein. Dies hätte jedoch zur Folge, dass die Relation zwischen den Positionen des Cursors und der zugeordneten Bewegungsmöglichkeit oder Bewegungsmöglichkeiten der ausgewählten Bearbeitungseinheit 56 fehlt.

Aus diesem Grund ist vorgesehen, dass beim Antasten einer der Bearbeitungseinheiten 56 zur Auswahl derselben ein Abstand der Position des Bezugspunktes B des Cursors 82 von einem aus dem Maschinenmodul 48 bekannten Bezugspunkt BB der ausgewählten Bearbeitungseinheit 56 ermittelt wird und dann zur Bestimmung der manuellen Positionsdaten MP die Positionen des Bezugspunkts BB, ermittelt aufgrund der Position des Bezugspunktes B des Cursors 82 und des Abstandes desselben vom Bezugspunkt BB, herangezogen werden.

Diese manuellen durch Bewegen des Cursors 82 ermittelten Positionsdaten MP werden sinnvollerweise bereits mit dem in der jeweiligen virtuellen Bearbeitungseinheit 56 vorgesehenen Werkzeug und somit unter Berücksichtigung der Abmessungen desselben beim Bewegen des Cursors 82 ermittelt, da dieses Werkzeug einen zusätzlichen Raumbedarf hat und somit die Lage einer Spitze dieses Werkzeugs relativ zu dem Bezugspunkt BB der jeweiligen virtuellen Bearbeitungseinheit 56 bei der manuellen Bewegung derselben zu berücksichtigen ist.

Aus diesem Grund ist die Interaktionseinheit 80 so ausgebildet, dass sie einen aufrufbaren Werkzeugkorrekturmodus aufweist und in dem Werkzeugkorrekturmodus über einen Werkzeugkorrekturgenerator 96 die Erzeugung einer Werkzeugkorrekturadresse WKA zu dem vorhandenen Werkzeug und die Eingabe der Werkzeugkorrekturdaten WKD, beispielsweise manuell, insbesondere über ein Tastenfeld 100, in ein Eingabefeld EF zu dem jeweiligen Werkzeug erlaubt, oder es ermöglicht, die Werkzeugkorrekturdaten WKD, wenn sie schon im Werkzeugkorrekturmodul 65 vorhanden sind, aufzurufen.

Die Werkzeugkorrekturdaten WKD sind dann in einem Werkzeugkorrektursubstraktionsmodul 102 unter der Werkzeugkorrekturadresse WKA und - sofern noch nicht vorhanden - in dem Werkzeugkorrekturmodul 65 unter der Werkzeugkorrekturadresse WKA ablegbar.

Mit dem Werkzeugkorrektursubstraktionsmodul 102 werden aus den manuellen Positionsdaten MP nach Subtraktion der Werkzeugkorrekturdaten WKD manuelle Lagedaten ML generiert, die hinsichtlich ihres Informationsgehalts und ihrer Verwendungsmöglichkeit den programmierten Lagedaten PL entsprechen, und diese manuellen Lagedaten ML werden von einer Ausgangsstufe 103 dem Werkzeugkorrekturmodul 65 übergeben.

Somit lassen sich mit den manuellen Lagedaten ML in dem Werkzeugkorrekturmodul 65, dem von der Ausgangsstufe 103 auch die Werkzeugkorrekturadresse WKA übergeben wird, und unter Berücksichtigung der unter der Werkzeugkorrekturadresse WKA abgespeicherten Werkzeugkorrekturdaten WKD die Lageinformationen L generierten, mit welchen der Lageregler 66 arbeitet, um die Regelinformationen RI zu erzeugen.

Außerdem umfasst die Funktionsdatengeneratoreinheit 92 einen Steuerdatengenerator 98, der in Verbindung mit der Funktionswahleinheit 90 in der Lage ist, auf dem Bildschirm 51 durch Visualisierungselemente in Form von graphischen Elementen oder Funktionsfelder FF, beispielsweise tabellarische Darstellungen 74, Aktionen von virtuellen Aktoren anzubieten, von denen mit dem Cursor 82 auf dem Bildschirm 51 einzelne Aktionen der virtuellen Aktoren manuell ausgewählt werden können.

Der Steuerdatengenerator 98 ermittelt dann zu den manuell ausgewählten Aktionen der virtuellen Aktoren die entsprechenden manuellen Steuerdaten MST.

Die manuellen Steuerdaten MST die die Ausgangsstufe 103 zur Verfügung stellt, haben denselben Informationsgehalt wie die programmierten Steuerdaten PST und sind in derselben Weise der Anpasssteuerung 68 zur Steuerung der Aktionen der Aktoren übermittelbar.

Dabei weist die Ausgangsstufe 103 dieselben Funktonalitäten auf wie die Ausgangsstufe 63A, d.h. die Ausgangsstufe 103 fordert in gleicher Weise wie die Ausgangsstufe 63A eine Rückmeldung bezüglich der Aktion der Aktoren.

Somit ermöglicht die Funktionsdatengeneratoreinheit 92 manuelle Lagedaten ML, eine Werkzeugkorrekturadresse WKA und manuelle Steuerdaten MST zu generieren, die, wenn sie beispielsweise dem Werkzeugkorrekturmodul 65₁ und der Anpasssteuerung 68₁ des Kanals 62₁ zugeführt werden, zu denselben Regelinformationen RI und Aktorsignalen AS führen, wie in diesem Kanal 62₁ generierte programmierte Lagedaten PL und Programmsteuerdaten PST.

Werden die in dem Kanal 62₁ erzeugten Regelinformationen RI und die Aktorsignale AS der Visualisierungssteuerung 40 übermittelt, so lassen sich die durch die manuellen Lagedaten ML, die Werkzeugkorrekturadresse WKA und die manuellen Steuerdaten MST erzeugbaren Bewegungen der virtuellen Bearbeitungseinheiten 56 und Aktoren auf dem Bildschirm 51 als Bewegungen und Aktionen der virtuellen Bearbeitungseinheiten 56 und Aktionen der virtuellen Aktoren durch die Visualisierungselemente G, FF, beispielsweise in Form von graphischen Elementen G oder Funktionsfeldern FF, visualisieren.

Dasselbe ist bei der Erzeugung manueller Lagedaten ML, Werkzeugkorrekturadressen WKA und manueller Steuerdaten MST für andere Kanäle 62 durchführbar.

Damit kann mittels des Cursors 82 der Interaktionseinheit 80 auf dem Bildschirm 51 die jeweilige ausgewählte virtuelle Bearbeitungseinheit 56 manuell bewegt werden, wobei aufgrund der manuellen Lagedaten ML, der Werkzeugkorrekturadresse WKA und der manuellen Steuerdaten MST mittels des Werkzeugkorrekturmoduls 65, des Lagereglers 66, der Anpasssteuerung 68 und der Visualisierungssteuerung 40 das in Arbeitsstellung stehende virtuelle Werkzeug VWZ auf dem Bildschirm 51 die gewünschte Bewegung relativ zum virtuellen Werkstück VWS ausführt. Diese gewünschte Bewegung kann beispielsweise eine virtuelle Bearbeitung des virtuellen Werkstücks VWS darstellen oder auch nur ein Anfahren des virtuellen Werkstücks VWS über einen bestimmten Weg darstellen.

Damit besteht die Möglichkeit, mittels der Interaktionseinheit 80 die virtuellen Bearbeitungseinheiten 56 auf den Bildschirm 51 in der gewünschten Art und Weise, beispielsweise für die virtuelle Bearbeitung, zu verschieben und das Ergebnis der Verschiebung gleichzeitig auf der Visualisierungseinheit 50 darzustellen und somit einzelne Bewegungen der virtuellen Bearbeitungseinheiten 56 oder auch Gesamtbewegungen der virtuellen Bearbeitungseinheiten 56 auf dem Bildschirm 51 der Visualisierungseinheit 50 mit den Randbedingungen entsprechend der realen Werkzeugmaschine 12 mit den virtuellen Bearbeitungseinheiten 56 auszutesten.

Die manuellen Lagedaten ML, die Werkzeugkorrekturadressen WKA und die manuellen Steuerdaten ST werden bereits von der Funktionsdatengeneratoreinheit 92 durch ein für das gesamte Steuerungssystem vorgesehene Taktsignal zeitlich synchronisiert erzeugt, so dass eine exakte Zeit-Lage-Synchronisation der Daten vorliegt, wie sie beispielsweise bei einem Bahnfahren, d.h. einer komplexen Bewegung in Richtung von mindestens zwei Achsen der Werkzeugmaschine erforderlich ist.

Um die in der beschriebenen Art und Weise erzeugten manuellen Lagedaten ML, Werkzeugkorrekturadressen WKA und manuellen Steuerdaten MST abspeichern zu können, werden diese in einem Datenstromgenerator 120 zu einem zeitsynchronen Datenstrom D zusammengefügt, in dem die Werkzeugkorrekturadressen WKA, die manuellen Steuerdaten MST und die manuellen Lagedaten ML als zeitlich aufeinanderfolgende Sequenz bei exakter Zeit-Lage-Synchronisation in der Reihenfolge, wie sie auch dem Werkzeugkorrekturmodul 65, der Anpasssteuerung 68 und dem Lageregler 66 zugeführt werden, vorliegen.

Dieser Datenstrom D wird von dem Datenstromgenerator 120 einer Aufnahme-/Wiedergabeeinheit 110 zugeführt, in welcher der Datenstrom D als Datenstromfile DF ablegbar ist, wobei ein derartiges Datenstromfile DF alle Informationen aufweist, die zur Ansteuerung des Werkzeugkorrekturmoduls 65, der Anpasssteuerung 68 und des Lagereglers 66 eines der Kanäle 62 notwendig sind.

Aus diesem Grund ist mittels der Funktionswahleinheit 90 auch die Zuordnung des jeweiligen Datenfiles DF zu dem jeweiligen Kanal 62 festlegbar.

Damit lassen sich mittels der Funktionswahleinheit 90 und der Funktionsdatengeneratoreinheit 92 nacheinander die Datenfiles DF für die einzelnen Kanäle 62 erzeugen und in der Aufnahme-/Wiedergabeeinheit 110 ablegen.

Da bei einem Betrieb der realen Werkzeugmaschine 12 und auch bei einer Simulation sämtlicher Bearbeitungsvorgänge mit den virtuellen Bearbeitungseinheiten 56 sämtliche Kanäle 62 gleichzeitig betrieben werden, besteht mit der Funktionswahleinheit 90 auch die Möglichkeit, die in der Aufnahme-/Wiedergabeeinheit 110 abgespeicherten Datenfiles DF, die verschiedenen Kanälen 62 zugeordnet sind, miteinander zeitsynchron zu kombinieren und zeitsynchron der Ausgangsstufe 103 zu übermitteln, die die Datenströme D mehrerer Datenfiles DF parallel verarbeitet und parallel dem jeweiligen Werkzeugkorrekturmodul 65 und der jeweiligen Anpasssteuerung 68 des jeweiligen Kanals 62 zu übermittelt.

Darüber hinaus erlaubt die Funktionswahleinheit 90 auch einen Betrieb der Ausgangsstufe 103 derart, dass in dieser der Datenstrom D eines bereits erstellten Datenfiles DF abgearbeitet wird und parallel hierzu mittels der Funktionsauswahleinheit 90 und der Funktionsdatengeneratoreinheit 92 der Datenstrom D zu einem weiteren Kanal 62 und somit auch das entsprechende Datenfile DF manuell generiert werden, um somit die Bewegungen der Bearbeitungseinheiten gesteuert durch verschiedene Kanäle 62 miteinander zu koordinieren.

Schließlich besteht mittels der Funktionswahleinheit 90 und der Funktionssteuerdatengeneratoreinheit 92 auch noch die Möglichkeit, den Datenstrom D eines Datenfiles DF eines Kanals 62 zu reproduzieren und die entsprechenden Funktionen auf dem Bildschirm 51 der Visualisierungseinheit 50 darzustellen, jedoch die Reproduktion des Datenstroms D gezielt anzuhalten und Korrekturen der Bewegungen oder Aktionen vorzunehmen, die zu geänderten manuellen Lagedaten ML oder manuellen Steuerdaten MST oder geänderten Werkzeugkorrekturadressen WKA führen, die dann unmittelbar in dem Datenstrom D geändert werden.

Um ferner die Datenströme D der Datenfiles DF unmittelbar zur Steuerung der realen Werkzeugmaschine 12 einsetzen zu können, ist vorzugsweise vorgesehen, dass die jeweiligen Datenströme D von der Funktionsdatengeneratoreinheit 92 entsprechend einem für das Steuerungssystem vorgesehenen Taktsignal generiert werden, das auch dem Taktsignal des Werkzeugkorrekturmoduls 65, des Lagereglers 66 und der Anpasssteuerung 68 sowie insbesondere dem Taktsignal der gesamten Aktionssteuerung 20 entspricht.

Eine erfindungsgemäße Aktionssteuerung 20 ist nicht grundsätzlich darauf angewiesen, CNC-Programme abzuarbeiten und insbesondere in den einzelnen Kanälen 62 CNC-Teileprogramme abzuarbeiten.

Es besteht jedoch, wie in Fig. 3 und 4 dargestellt, die Möglichkeit, in jedem Kanal 62 zugeordnet, eine CNC-Satzaufbereitung 63 mit Berechnung von Programmpositionsdaten PPD vorzusehen, so dass in dem jeweiligen Kanal 62 auch auf der Basis von CNC-Teileprogrammen 230 werkzeugneutrale programmierte Lagedaten PL für die einzelnen Bewegungsmöglichkeiten ermittelt werden können, die dem Werkzeugkorrekturmodul 65 zugeführt werden und somit nach der Werkzeugkorrektur Lageinformationen L für den jeweiligen Lageregler 66 ergeben.

Ferner können aus den CNC Teileprogrammen 230 programmierte Steuerdaten PST und Werkzeugkorrekturadressen WKA generiert und dem Werkzeugkorrekturmodul 65 sowie der Anpasssteuerung 68 übergeben werden.

Mit einer derartigen Lösung besteht somit die Möglichkeit, bestehende CNC-Programme zur Steuerung des Lagereglers 66 und der Anpasssteuerung 68 und somit zur Steuerung der Bewegungsmöglichkeiten der realen Bearbeitungseinheiten 36 und/oder der virtuellen Bearbeitungseinheiten 56 einzusetzen und den durch die Ausgangsstufe 63A erzeugten programmierten Lagedaten PL, Werkzeugkorrekturadressen WKA sowie Programmsteuerdaten PST dem Datenstromgenerator 120 zu übergeben, so dass ein durch diesen ein maschinensteuerungsfähiger Datenstrom D erzeugt wird und dieser dann von der Aufnahme-/Wiedergabeeinheit 110 aufgezeichnet wird.

Damit besteht die Möglichkeit, aus konventionellen CNC-Programmen einen maschinensteuerungsfähigen Datenstrom D zu generieren, der nachfolgend als steuernder Datenstrom D eingesetzt werden kann.

Soll beispielsweise auch die Aktionssteuerung 20 mit einem konventionellen CNC-Programm arbeiten können, ist vorzugsweise eine Bediensteuerung 260 vorgesehen, welche eine dritte Datenverarbeitungseinheit 262 aufweist, die ihrerseits beispielsweise einen Prozessor 264 und einen Speicher 266 umfasst, wobei in dem Speicher 266 eines oder mehrere CNC-Bearbeitungsprogrammkomplexe 268 abgespeichert sind (Fig. 2).

Auf der dritten Datenverarbeitungseinheit 262 läuft in diesem Fall dann ein als Ganzes mit 270 bezeichnetes und in Fig. 3 schematisch dargestelltes Bedienprogramm, welches eine Bedienoberfläche 272 aufweist, die mit einer als Ganzes mit 280 bezeichneten Maschinensteuertafel zusammenwirkt, die beispielsweise ein übliches Tastenfeld 282 sowie separate Funktionstasten 284 und 286 aufweist.

Sowohl über das Tastenfeld 282 als auch über die Funktionstasten 284 und 286 besteht die Möglichkeit, einzelne Funktionsabläufe oder Modi des Bedienprogramms 270 in bekannter Weise aufzurufen und/oder zu aktivieren.

Ferner ist der Maschinensteuertafel 280 vorzugsweise noch ein Anzeigefeld 290 zugeordnet, welches zur Anzeige von von dem Bedienprogramm 270 ermittelten Informationen dient. Das Anzeigefeld 290 kann entweder ein selbstständiges Anzeigefeld sein oder es kann durch einen Ausschnitt des Bildschirms 52 repräsentiert werden.

Das Bedienprogramm 270 umfasst dann beispielsweise, wie in Fig. 3 dargestellt, als Ganzes mit 292 bezeichnete Programmverwaltungsfunktionen, welche in der Lage sind, den im Speicher 266 gespeicherten CNC-Bearbeitungsprogrammkomplex 268 werkstückbezogen zu verwalten, wie dies aus dem Stand der Technik, beispielsweise der DE 2005 045 028 A1 bekannt ist.

Neben den Programmverwaltungsfunktionen 292 sind dabei auch noch Transferfunktionen 294 und beispielsweise noch ein Sicherungsmodus 296 sowie ein Stoppmodus 298 in bekannter Art und Weise durchführbar.

Erfindungsgemäß kann die Datenverarbeitungseinheit 262 eine Einheit mit Datenverarbeitungseinheit 42 bilden, d.h. es muss nur eine Datenverarbeitungseinheit für Bediensteuerung 270 und Visualisierungssteuerung 40 vorhanden sein.

Des Weiteren kann auch die Visualisierungseinheit 50 mit der Anzeigeeinheit und der Bediensteuerung 290 eine Einheit bilden und nur einmal existieren.

Ebenso kann die Aufnahme-/Wiedergabeeinheit 110 Bestandteil der Datenverarbeitungseinheit 262 oder 42 sein.

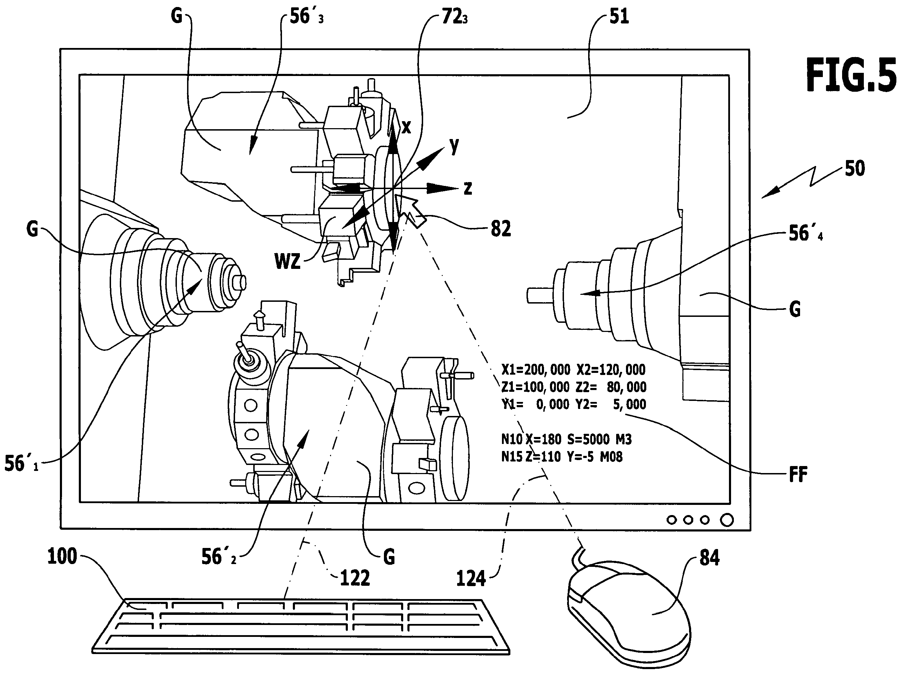

Bei einem zweiten Ausführungsbeispiel eines erfindungsgemäßen Steuerungssystems, dargestellt in Fig. 5 sind die Bearbeitungseinheiten 56' anders ausgebildet und anders konfiguriert als beim ersten Ausführungsbeispiel, hinsichtlich der Funktion derselben im Zusammenhang mit der erfindungsgemäßen Lösung ergeben sich jedoch keine Änderungen.

Fig. 5 veranschaulicht nochmals durch Einflusslinien 122 und 124, in welcher Weise eine manuelle Interaktion möglich ist, wobei die Einflusslinien 122 und 124 im dargestellten Fall anzeigen, dass manuelle Interaktionen im Zusammenhang mit der durch den Cursor 82 markierten Bearbeitungseinheit 56'₃ möglich sind.

Zum einen besteht mit der Maus 84 die Möglichkeit, den Cursor 82 zu verschieben und somit eine Bahn für eine Bewegung der Bearbeitungseinheit 56'₃ vorzugeben.

Ferner sind durch die graphischen Symbole 72₃ die Bewegungsmöglichkeiten der Bearbeitungseinheit 56'₃ vorzugeben und die Einflusslinie 122 zeigt noch, dass mittels des Tastenfelds 100 beispielsweise Werkzeugkorrekturdaten eingebbar sind, und zwar die zu dem in Arbeitsstellung stehenden Werkzeug WZ gehörenden Werkzeugkorrekturdaten WKD.

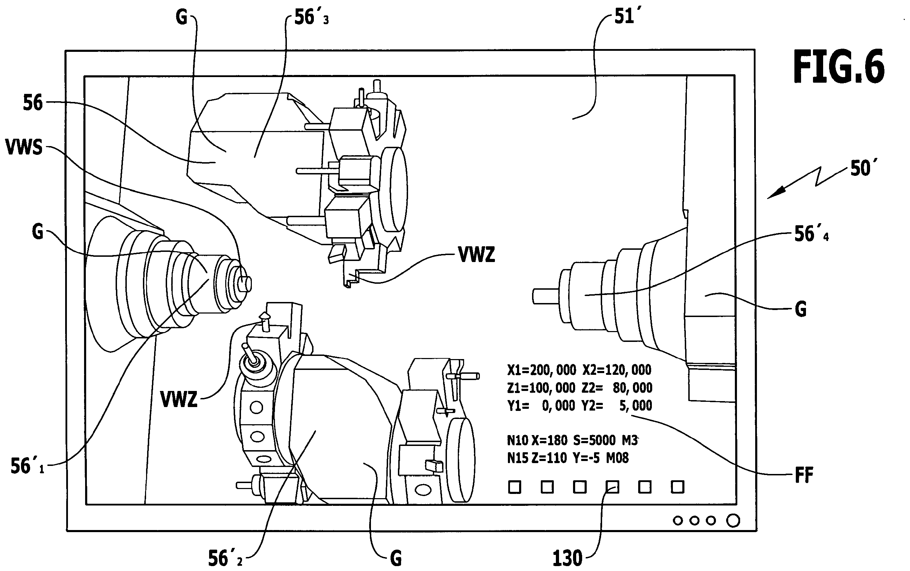

Bei einem dritten Ausführungsbeispiel eines erfindungsgemäßen Steuersystems 10, dargestellt in Fig. 6 bis 8, sind diejenigen Elemente, die mit denen des ersten und zweiten Ausführungsbeispiels des erfindungsgemäßen Steuersystems identisch sind, mit demselben Bezugszeichen versehen, so dass hinsichtlich der Funktion und der Beschreibung derselben vollinhaltlich auf das erste Ausführungsbeispiel verwiesen wird.

Im Gegensatz zum ersten Ausführungsbeispiel ist der Bildschirm 51' der Visualisierungseinheit 50' als berührungssteuerbarer Bildschirm, oder auch Touchscreen genannt, ausgebildet, welcher somit in der Lage ist, neben den Visualisierungselementen G und FF auch gegebenenfalls erforderliche Bedientasten 130 darzustellen, so dass über diese Bedientasten 130 weitere Bedienungsfunktionen realisierbar sind.

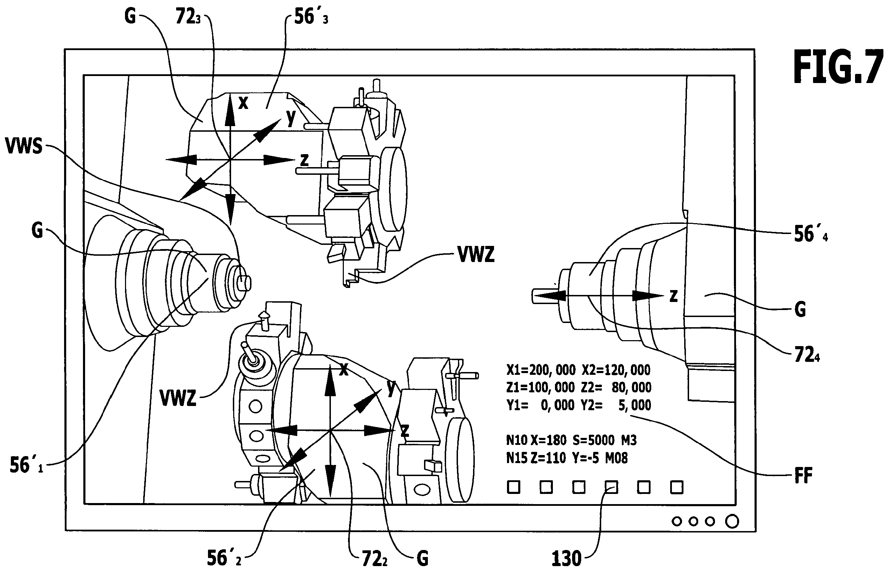

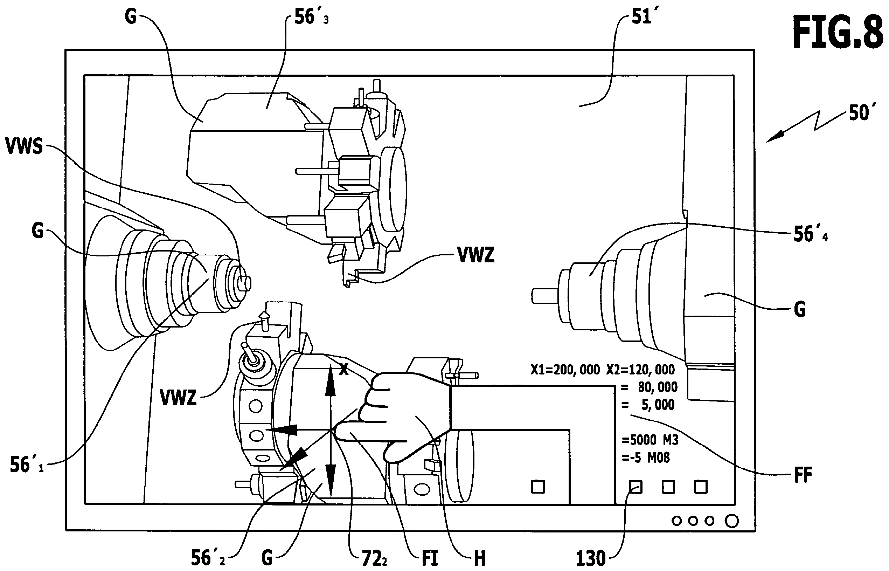

Zur Anzeige der möglichen Funktionen sind, wie in Fig. 7 und Fig. 8 dargestellt, graphische Symbole 72 als Visualisierungselemente vorgesehen, welche es erlauben, die Bewegungsmöglichkeiten in Richtung der Achsen, beispielsweise in Richtung der X-, Y- und Z-Achsen, die bei jeder der Bearbeitungseinheiten 56'₂, 56'₃ und 56'₄ vorgesehen sind, zu visualisieren.

Diese graphischen Symbole 72₂, 72₃ und 72₄ lassen sich beispielsweise dadurch aktivieren, dass eine Bedienungsperson, wie in Fig. 8 dargestellt, mit ihrer Hand H vorzugsweise mit einem Finger FI auf das graphische Element G der jeweiligen Bearbeitungseinheit 56'₂. 56'₃ und 56'₄ drückt und somit dieses antastet. Erst durch dieses Antasten werden dann die graphischen Symbole 72₂, 72₃ und 72₄ eingeblendet, die die Bewegungsmöglichkeiten der Bearbeitungseinheiten 56'₂, 56'₃ und 56'₄ aufzeigen.

Anstelle der Maus 84 hat bei diesem Ausführungsbeispiel die Bedienungsperson, wie in Fig. 8 dargestellt, die Möglichkeit, mit ihrer Hand H, insbesondere unter Einsatz eines Fingers FI, unmittelbar auf dem Bildschirm 51' durch Antasten des die Bearbeitungseinheit 56₂ darstellenden graphischen Elements G, die Einblendung des graphischen Symbole 72₂ zu bewirken, welche die Bewegungsmöglichkeiten, die in Richtung der X, der Y und der Z-Achse bestehen, anzeigt.

Hierdurch erfolgt dann eine Zuordnung der nachfolgenden Bewegung des mit dem Finger FI auf dem Bildschirm 51' erzeugten Bezugspunktes zu den Bewegungsmöglichkeiten der Bearbeitungseinheit 56₂ und ein Bewegen des Bezugspunktes auf dem Bildschirm 51' bewirkt die Erzeugung von manuellen Positionsdaten MP, wie im Zusammenhang mit dem ersten Ausführungsbeispiel beschrieben.

Dadurch werden dann, in gleicher Weise wie beim ersten Ausführungsbeispiel beschrieben, manuelle Lagedaten ML und manuelle Steuerdaten MST erzeugt, die wiederum bewirken, dass die Visualisierungssteuerung 40 die Visualisierungseinheit 50' derart ansteuert, dass ein Verschieben der Bearbeitungseinheit 56'₂ auf dem Bildschirm 51' erfolgt, wie dies im Zusammenhang mit dem ersten Ausführungsbeispiel im Detail erläutert wurde.

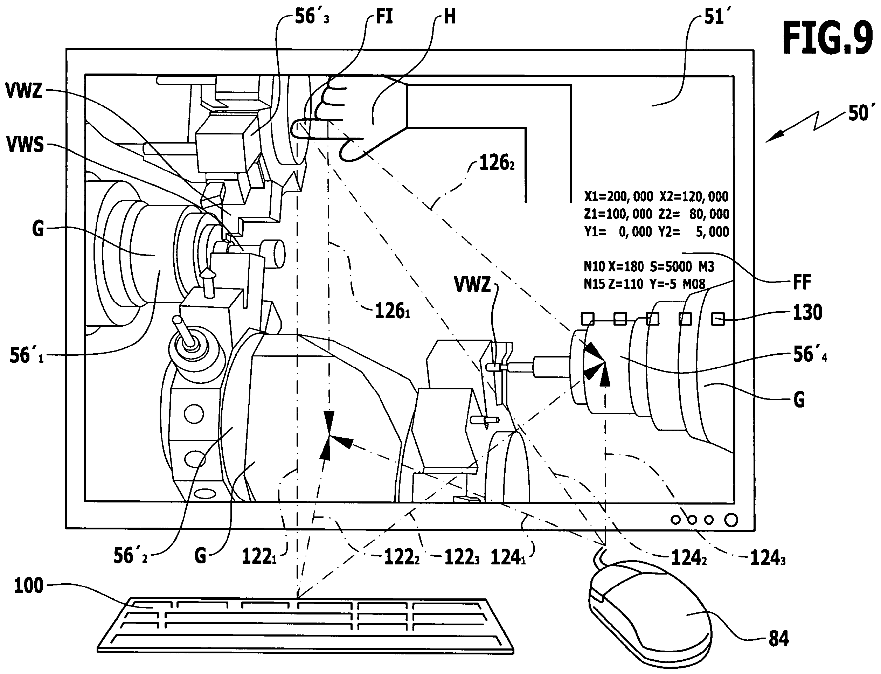

Bei einem vierten Ausführungsbeispiel eines erfindungsgemäßen Steuerungssystems, dessen Bildschirm 51' in Fig. 9 dargestellt ist, sind die möglichen Interaktionen der voranstehenden Ausführungsbeispiele in Kombination miteinander möglich.

Das heißt, es besteht sowohl die Möglichkeit über die im Zusammenhang mit dem ersten Ausführungsbeispiel und dem zweiten Ausführungsbeispiel dargestellten Bedieneinheiten, nämlich die Maus 84 und das Tastenfeld 100, manuelle Interaktionen vorzunehmen. Gleichzeitig ist aber der Bildschirm als bedienungssteuerbarer Bildschirm 51' ausgebildet, so dass auch die Möglichkeit besteht, dass die Bedienungsperson unmittelbar mit der Hand H durch Drücken mittels eines Fingers FI auf eine Stelle des Bildschirms 51' eine Interaktion in der im Zusammenhang mit dem dritten Ausführungsbeispiel beschriebenen Art und Weise vornimmt.

Diese möglichen Interaktionen sind in Fig. 9 noch durch Einflusslinien 122 und 124 und 126 dargestellt.

Somit lassen sich mit allen beschriebenen manuellen Interaktionen über die Funktionsdatengeneratoreinheit 92 manuelle Lagedaten ML, Werkzeugkorrekturadressen WKA und manuelle Steuerdaten MST in der beschriebenen Art und Weise erzeugen und einsetzen.

## Patentansprüche

1. Verfahren zur Steuerung einer einen Arbeitsraum (30) und in diesem angeordnete Bearbeitungseinheiten (36) aufweisenden Werkzeugmaschine (12), bei welchem basierend auf Betriebsdaten sowie basierend auf einem abgespeicherten Maschinenmodell (48) auf einer Visualisierungseinheit (50) die reale Werkzeugmaschine (12) mindestens im Bereich ihres Arbeitsraums (30) mittels Visualisierungselementen (G, FF) als virtuelle Werkzeugmaschine (52) mit in einem virtuellen Arbeitsraum (54) vorgesehenen virtuellen Bearbeitungseinheiten (56) sowie deren Funktionen als virtuelle Funktionen dargestellt wird,
**dadurch gekennzeichnet, dass** eine Funktion der Funktionen der Werkzeugmaschine (12) einer manuellen Interaktion zugeordnet wird, dass mittels einer die manuelle Interaktion erlaubenden Interaktionseinheit (80) die dieser manuellen Interaktion zugeordnete eine Funktion der Werkzeugmaschine als manuelle Bewegung der Interaktionseinheit (80) ausgeführt und somit vorgegeben wird, dass als Interaktionseinheit (80) zur Erfassung der manuellen als Bewegung ausgeführten Interaktion eine Handbedieneinheit (84), insbesondere eine Computermaus, verwendet wird, dass die manuelle Einwirkung auf die Interaktionseinheit (80) durch ein durch diese steuerbares und auf der Visualisierungseinheit (50) vorgesehenes Interaktionsvisualisierungselement (82) dargestellt wird, so dass mittels der Handbedieneinheit (84) die Funktion als Bewegung des Interaktionsvisualisierungselements (82) auf der Visualisierungseinheit (50) vorgegeben wird, dass mit einer Funktionsdatengeneratoreinheit (92) der bei der manuellen Interaktion mit der Handbedieneinheit (84) ausgeführten und somit vorgegebenen Bewegung unter Berücksichtigung der dieser manuellen Interaktion zugeordneten einen Funktion entsprechende Betriebsdaten (ML, MST) erzeugt werden und diese Betriebsdaten (ML, MST) einer Visualisierungssteuerung (40) zur Darstellung der durch die manuelle Interaktion vorgegebenen Funktion auf der Visualisierungseinheit (50) mittels den Visualisierungselementen (G, FF) übermittelt werden, so dass die dem Interaktionsvisualisierungselement (82) vorgegebene Bewegung auf der Visualisierungseinheit (50) mittels der Visualisierungssteuerung (40) auf der virtuellen Werkzeugmaschine (52) als Bewegung von mindestens einem der Visualisierungselemente (G, FF) visualisiert wird.

2. Verfahren zur Steuerung einer einen Arbeitsraum (30) und in diesem angeordnete Bearbeitungseinheiten (36) aufweisenden Werkzeugmaschine (12), bei welchem basierend auf Betriebsdaten sowie basierend auf einem abgespeicherten Maschinenmodell (48) auf einer Visualisierungseinheit (50) die reale Werkzeugmaschine (12) mindestens im Bereich ihres Arbeitsraums (30) mittels Visualisierungselementen (G, FF) als virtuelle Werkzeugmaschine (52) mit in einem virtuellen Arbeitsraum (54) vorgesehenen virtuellen Bearbeitungseinheiten (56) sowie deren Funktionen als virtuelle Funktionen dargestellt wird,
**dadurch gekennzeichnet, dass** eine Funktionder Funktionen der Werkzeugmaschine (12) einer manuellen Interaktion zugeordnet wird, dass mittels einer die manuelle Interaktion erlaubenden Interaktionseinheit (80) die dieser manuellen Interaktion zugeordnete eine Funktion der Werkzeugmaschine als manuelle Bewegung der Interaktionseinheit (80) ausgeführt und somit vorgegeben wird, dass als Interaktionseinheit (80) zur Erfassung der manuellen als Bewegung ausgeführten Interaktion eine berührungssteuerbare Visualisierungseinheit (50'), beispielsweise ein sogenannter Touchscreen, verwendet wird, dass mittels einer die manuelle Interaktion erlaubenden berührungssteuerbaren Visualisierungseinheit (51') die dieser manuellen Interaktion zugeordnete eine Funktion der Werkzeugmaschine als manuelle Bewegung eines Fingers (FI) auf der berührungssteuerbaren Visualisierungseinheit (51') ausgeführt und somit vorgegeben wird, dass mit einer Funktionsdatengeneratoreinheit (92) der bei der manuellen Interaktion mit der berührungssteuerbaren Visualisierungseinheit (51') ausgeführten und somit vorgegebenen Bewegung unter Berücksichtigung der dieser manuellen Interaktion zugeordneten einen Funktion entsprechende Betriebsdaten (ML, MST) erzeugt werden und diese Betriebsdaten (ML, MST) einer Visualisierungssteuerung (40) zur Darstellung der durch die manuelle Interaktion vorgegebenen Funktion auf der Visualisierungseinheit (50') mittels den Visualisierungselementen (G, FF) übermittelt werden, so dass die bei der manuellen Interaktion auf der berührungssteuerbaren Visualisierungseinheit (51') ausgeführte und vorgegebene Bewegung mittels der Visualisierungssteuerung (40) auf der virtuellen Werkzeugmaschine (52) als Bewegung von mindestens einem der Visualisierungselemente (G, FF) visualisiert wird.

3. Verfahren nach Anspruch 1 oder 2, **dadurch gekennzeichnet, dass** die mit der Funktionsdatengeneratoreinheit (92) erzeugten Betriebsdaten (ML, MST) in einer Aufnahme/Wiedergabeeinheit (110) gespeichert werden.

4. Verfahren nach einem der voranstehenden Ansprüche, **dadurch gekennzeichnet, dass** mit der Interaktionseinheit (80) die Funktion durch Antasten eines Funktionsfeldes (FF) auf der Visualisierungseinheit (50) vorgegeben und mittels der Visualisierungssteuerung (40) in ihrer Ausführung auf der virtuellen Werkzeugmaschine (52) visualisiert wird.

5. Verfahren nach einem der voranstehenden Ansprüche, **dadurch gekennzeichnet, dass** mit der Interaktionseinheit (80) die jeweils der manuellen Interaktion zuzuordnende Funktion ausgewählt wird.

6. Verfahren nach Anspruch 5, **dadurch gekennzeichnet, dass** die Auswahl der Funktion durch Aufrufen mindestens eines der Visualisierungselemente (G, FF) erfolgt.

7. Verfahren nach Anspruch 5 oder 6, **dadurch gekennzeichnet, dass** das mindestens eine der Visualisierungselemente (G, FF) durch Anfahren und Antasten des mindestens einen der Visualisierungselemente (G, FF) mit Hilfe der Interaktionseinheit (80) aufgerufen wird.

8. Verfahren nach einem der voranstehenden Ansprüche, **dadurch gekennzeichnet, dass** bei Auswahl der Funktion das die Funktion repräsentierende Visualisierungselement (G, FF) auf der Visualisierungseinheit (50) hervorgehoben dargestellt wird und/oder, dass ein Aufrufen der jeweiligen Funktion eine Darstellung des Visualisierungselements (G, FF) dieser Funktion zur Folge hat.

9. Verfahren nach einem der voranstehenden Ansprüche, **dadurch gekennzeichnet, dass** in dem Maschinenmodell (48) die möglichen Funktionen der realen Werkzeugmaschine (12) gespeichert werden und dass durch Funktionswahleinheit (90) die zuzuordnenden Funktionen auf die möglichen Funktionen der realen Werkzeugmaschine (12) begrenzt werden.

10. Verfahren nach einem der voranstehenden Ansprüche, **dadurch gekennzeichnet, dass** mit einem Positionsdatengenerator (94) Positionsdaten der Interaktionseinheit (80) erfasst und aus diesen die Lagedaten (ML) generiert werden.

11. Verfahren nach Anspruch 10, **dadurch gekennzeichnet, dass** der Positionsdatengenerator (94) von den von der Interaktionseinheit (80) erhaltenen Positionsdaten Werkzeugkorrekturdaten (WKD) subtrahiert.

12. Verfahren nach einem der voranstehenden Ansprüche, **dadurch gekennzeichnet, dass** die Funktionsdatengeneratoreinheit (92) einen Steuerdatengenerator (98) aufweist, der Steuervorgaben von der Interaktionseinheit (80) erfasst.

13. Verfahren nach Anspruch 12, **dadurch gekennzeichnet, dass** mit dem Steuerdatengenerator (98) aus den Steuervorgaben die Steuerdaten (MST) generiert werden.

## Claims

1. Method for controlling a machine tool (12) having a work space (30) and machining units (36) arranged therein, in which, based on operating data and based on a stored machine model (48), the actual machine tool (12), at least in the region of the work space (30) thereof, is represented on a visualization unit (50) by means of visualization elements (G, FF) as a virtual machine tool (52) having virtual machining units (56) provided in a virtual work space (54), and the functions of the virtual machining units are represented as virtual functions, **characterized in that** one function of the functions of the machine tool (12) is associated with a manual interaction, that by means of an interaction unit (80) which allows the manual interaction, the one function of the machine tool which is associated with this manual interaction is carried out and thus specified as manual movement of the interaction unit (80), that a hand-held control unit (84) is used as interaction unit (80), in particular a computer mouse, for determining the manual interaction carried out as movement, that the manual effect on the interaction unit (80) is represented by an interaction visualization element (82) which is controllable by the interaction unit and is provided on the visualization unit (50), so that the function is specified on the visualization unit (50) as movement of the interaction visualization element (82) using the hand-held control unit (84), that a function data generator unit (92) is used to generate operating data (ML, MST) which correspond to the movement carried out and thus specified during the manual interaction using the hand-held control unit (84), while taking into account the one function associated with this manual interaction, and these operating data (ML, MST) are transmitted to a visualization controller (40) in order to represent, on the visualization unit (50), using the visualization elements (G, FF), the function specified by the manual interaction, so that the movement, on the visualization unit (50), specified for the interaction visualization element (82), is visualized on the virtual machine tool (52), by means of the visualization controller (40), as movement of at least one of the visualization elements (G, FF).

2. Method for controlling a machine tool (12) having a work space (30) and machining units (36) arranged therein, in which, based on operating data and based on a stored machine model (48), the actual machine tool (12), at least in the region of the work space (30) thereof, is represented on a visualization unit (50) by means of visualization elements (G, FF) as a virtual machine tool (52) having virtual machining units (56) provided in a virtual work space (54), and the functions of the virtual machining units are represented as virtual functions, **characterized in that** one function of the functions of the machine tool (12) is associated with a manual interaction, that by means of an interaction unit (80) which allows the manual interaction, the one function of the machine tool which is associated with this manual interaction is carried out and thus specified as manual movement of the interaction unit (80), that a touch-controllable visualization unit (50') is used as interaction unit (80), for example a so-called touchscreen, for determining the manual interaction carried out as movement, that by means of a touch-controllable visualization unit (51') which allows the manual interaction, the one function of the machine tool which is associated with this manual interaction is carried out and thus specified as manual movement of a finger (FI) on the touch-controllable visualization unit (51'), that a function data generator unit (92) is used to generate operating data (ML, MST) which correspond to the movement carried out and thus specified during the manual interaction using the touch-controllable visualization unit (51'), while taking into account the one function associated with this manual interaction, and these operating data (ML, MST) are transmitted to a visualization controller (40) in order to represent, on the visualization unit (50'), using the visualization elements (G, FF), the function specified by the manual interaction, so that the movement carried out and specified during the manual interaction on the touch-controllable visualization unit (51') is visualized on the virtual machine tool (52), by means of the visualization controller (40), as movement of at least one of the visualization elements (G, FF).

3. Method according to Claim 1 or 2, **characterized in that** the operating data (ML, MST) generated by the function data generator unit (92) are stored in a recording/playback unit (110).

4. Method according to any of the preceding claims, **characterized in that** by use of the interaction unit (80), the function is specified by touching a function field (FF) on the visualization unit (50), and is visualized, in its execution on the virtual machine tool (52), by means of the visualization controller (40).

5. Method according to any of the preceding claims, **characterized in that** the function to be associated with the manual interaction in each case is selected using the interaction unit (80).

6. Method according to Claim 5, **characterized in that** the function is selected by calling up at least one of the visualization elements (G, FF).

7. Method according to Claim 5 or 6, **characterized in that** at least one of the visualization elements (G, FF) is called up by passing over and touching the at least one of the visualization elements (G, FF), using the interaction unit (80).

8. Method according to any of the preceding claims, **characterized in that** when the function is selected, the visualization element (G, FF) representing the function is shown highlighted on the visualization unit (50) and/or that calling up the particular function results in a representation of the visualization element (G, FF) for this function.

9. Method according to any of the preceding claims, **characterized in that** the possible functions of the actual machine tool (12) are stored in the machine model (48), and that the function selection unit (90) limits the functions to be associated to the possible functions of the actual machine tool (12).

10. Method according to any of the preceding claims, **characterized in that** a position data generator (94) is used to determine position data of the interaction unit (80), and, based on these position data, the location data (ML) are generated.

11. Method according to Claim 10, **characterized in that** the position data generator (94) subtracts tool correction data (WKD) from the position data obtained from the interaction unit (80).

12. Method according to any of the preceding claims, **characterized in that** the function data generator unit (92) has a control data generator (98) which detects control instructions from the interaction unit (80).

13. Method according to Claim 12, **characterized in that** the control data (MST) are generated, based on the control instructions, using the control data generator (98).

## Revendications

1. Procédé de commande d'une machine-outil (12) comportant une chambre de travail (30) hébergeant des unités d'usinage (36), selon lequel, sur la base de données de fonctionnement ainsi que sur la base d'un modèle de machine (48) mis en mémoire, la machine-outil réelle (12) est représentée sur une unité de visualisation (50), au moins dans la zone de sa chambre de travail (30), au moyen d'éléments de visualisation (G, FF) sous la forme d'une machine-outil virtuelle (52) présentant des unités d'usinage virtuelles (56) situées dans une chambre de travail virtuelle (54) ainsi que les fonctions de celle-ci sous la forme de fonctions virtuelles,
**caractérisé en ce qu'**une fonction parmi les fonctions de la machine-outil (12) est associée à une interaction manuelle, **en ce qu'**au moyen d'une unité d'interaction (80) permettant l'interaction manuelle, l'une des fonctions de la machine-outil associée à cette interaction manuelle est réalisée sous la forme d'un déplacement manuel de l'unité d'interaction (80) et donc prédéfinie, **en ce qu'**une unité de commande manuelle (84), en particulier une souris, est utilisée comme unité d'interaction (80) destinée à détecter l'interaction manuelle réalisée sous la forme d'un déplacement, **en ce que** l'action manuelle sur l'unité d'interaction (80) est représentée par un élément de visualisation d'interaction (82) pouvant être commandé par ladite unité d'interaction et situé sur l'unité de visualisation (50), de telle sorte que la fonction est prédéfinie en tant que déplacement de l'élément de visualisation d'interaction (82) sur l'unité de visualisation (50) au moyen de l'unité de commande manuelle (84), **en ce qu'**une unité de génération de données de fonction (92) permet de produire le déplacement réalisé lors de l'interaction manuelle avec l'unité de commande manuelle (84) et donc prédéfini, en prenant en compte les données de fonctionnement (ML, MST) correspondant à l'une des fonctions associées à cette interaction manuelle, et ces données de fonctionnement (ML, MST) sont transmises à une commande de visualisation (40) destinée à représenter la fonction prédéfinie par l'interaction manuelle sur l'unité de visualisation (50) au moyen des éléments de visualisation (G, FF), de telle sorte que le déplacement prédéfini par l'élément de visualisation d'interaction (82) est visualisé sur l'unité de visualisation (50) au moyen de la commande de visualisation (40) sur la machine-outil virtuelle (52) sous la forme d'un déplacement d'au moins un des éléments de visualisation (G, FF).

2. Procédé de commande d'une machine-outil (12) comprenant une chambre de travail (30) hébergeant des unités d'usinage (36), selon lequel, sur la base de données de fonctionnement ainsi que sur la base d'un modèle de machine (48) mis en mémoire, la machine-outil réelle (12) est représentée sur une unité de visualisation (50), au moins dans la zone de sa chambre de travail (30) au moyen d'éléments de visualisation (G, FF) sous la forme d'une machine-outil virtuelle (52) présentant des unités d'usinage virtuelles (56) situées dans une chambre de travail virtuelle (54) ainsi que les fonctions de celle-ci sous la forme de fonctions virtuelles,
**caractérisé en ce qu'**une fonction parmi les fonctions de la machine-outil (12) est associée à une interaction manuelle, **en ce qu'**au moyen d'une unité d'interaction (80) permettant l'interaction manuelle, l'une des fonctions de la machine-outil associée à cette interaction manuelle est réalisée sous la forme d'un déplacement manuel de l'unité d'interaction (80) et donc prédéfinie, **en ce qu'**une unité de visualisation pouvant être commandée par contact (50'), par exemple un écran dit tactile, est utilisée comme unité d'interaction (80) destinée à détecter l'interaction manuelle réalisée sous la forme d'un déplacement, **en ce qu'**au moyen d'une unité de visualisation pouvant être commandée par contact (51') et permettant l'interaction manuelle, l'une des fonctions, associée à cette interaction manuelle, de la machine-outil est réalisée sous la forme d'un déplacement manuel d'un doigt (FI) sur l'unité de visualisation pouvant être commandée par contact (51') et donc prédéfinie, **en ce qu'**une unité de génération de données de fonction (92) permet de produire le déplacement réalisé lors de l'interaction manuelle avec l'unité de visualisation pouvant être commandée par contact (51') et donc prédéfini, en prenant en compte les données de fonctionnement (ML, MST) correspondant à l'une des fonctions associées à cette interaction manuelle, et ces données de fonctionnement (ML, MST) sont transmises à une commande de visualisation (40) destinée à représenter la fonction prédéfinie par l'interaction manuelle sur l'unité de visualisation (50') au moyen des éléments de visualisation (G, FF), de telle sorte que le déplacement prédéfini et réalisé lors de l'interaction manuelle sur l'unité de visualisation pouvant être commandée par contact (51') est visualisé au moyen de la commande de visualisation (40) sur la machine-outil virtuelle (52) sous la forme d'un déplacement d'au moins un des éléments de visualisation (G, FF).

3. Procédé selon la revendication 1 ou 2, **caractérisé en ce que** les données de fonctionnement (ML, MST) générées au moyen de l'unité de génération de données de fonction (92) sont mises en mémoire dans une unité de collecte/de reproduction (110).

4. Procédé selon l'une quelconque des revendications précédentes, **caractérisé en ce que** l'unité d'interaction (80) permet de prédéfinir la fonction par toucher d'un champ de fonctions (FF) sur l'unité de visualisation (50) et de visualiser sa réalisation sur la machine-outil virtuelle (52) au moyen de la commande de visualisation (40).

5. Procédé selon l'une quelconque des revendications précédentes, **caractérisé en ce que** l'unité d'interaction (80) permet de sélectionner la fonction à associer respectivement à l'interaction manuelle.

6. Procédé selon la revendication 5, **caractérisé en ce que** la sélection de la fonction est réalisée en accédant à au moins un des éléments de visualisation (G, FF).

7. Procédé selon la revendication 5 ou 6, **caractérisé en ce que** l'accès audit au moins un élément de visualisation (G, FF) se fait en s'approchant dudit au moins un élément de visualisation (G, FF) et en le touchant à l'aide de l'unité d'interaction (80).

8. Procédé selon l'une quelconque des revendications précédentes, **caractérisé en ce que**, lors de la sélection de la fonction, l'élément de visualisation (G, FF) représentant la fonction est représenté en surbrillance sur l'unité de visualisation (50) et/ou **en ce qu'**un accès à la fonction respective entraîne une représentation de l'élément de visualisation (G, FF) de cette fonction.

9. Procédé selon l'une quelconque des revendications précédentes, **caractérisé en ce que** les fonctions possibles de la machine-outil réelle (12) sont mises en mémoire dans le modèle de machine (48) et **en ce que** l'une unité de sélection de fonction (90) permet de limiter les fonctions à associer aux fonctions possibles de la machine-outil réelle (12).

10. Procédé selon l'une quelconque des revendications précédentes, **caractérisé en ce qu'**un générateur de données de position (94) détecte les données de position de l'unité d'interaction (80) et génère les données de position (ML) à partir de celles-ci.

11. Procédé selon la revendication 10, **caractérisé en ce que** le générateur de données de position (94) soustrait des données de correction d'outil (WKD) des données de position obtenues par l'unité d'interaction (80) .

12. Procédé selon l'une quelconque des revendications précédentes, **caractérisé en ce que** l'unité de génération de données de fonction (92) comprend un générateur de données de commande (98) qui détecte des instructions de commande de l'unité d'interaction (80).

13. Procédé selon la revendication 12, **caractérisé en ce que** le générateur de données de commande (98) permet de générer les données de commande (MST) à partir des instructions de commande.
